(19) **Europäisches Patentamt / European Patent Office / Office européen des brevets**

(11) **EP 4 694 459 A1**

(12) **EUROPEAN PATENT APPLICATION**
published in accordance with Art. 153(4) EPC

(43) Date of publication:
**11.02.2026 Bulletin 2026/07**

(21) Application number: **24788070.1**

(22) Date of filing: **09.04.2024**

(51) International Patent Classification (IPC):
**H04W 72/0453** (2023.01)

(52) Cooperative Patent Classification (CPC):
**H04W 8/24; H04W 72/0453**

(86) International application number:
**PCT/CN2024/086874**

(87) International publication number:
**WO 2024/212968 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 CN 202310413095
15.05.2023 CN 202310548555**

(71) Applicant: **Huawei Technologies Co., Ltd.
Shenzhen, Guangdong 518129 (CN)**

(72) Inventors:
- **HU, Dan
  Shenzhen, Guangdong 518129 (CN)**
- **LIU, Ye
  Shenzhen, Guangdong 518129 (CN)**

(74) Representative: **Isarpatent
Patent- und Rechtsanwälte Partg mbB
Friedrichstraße 31
80801 München (DE)**

(54) **COMMUNICATION METHOD AND APPARATUS**

(57) This application provides a communication method and apparatus, and belongs to the field of communication technologies, to reduce a waste of uplink transmission resources. In the method, a terminal device may perform uplink switching from a first band and a second band to a third band and a fourth band in two switching manners: A first radio frequency chain switches from the first band to the third band, and a second radio frequency chain switches from the second band to the fourth band; or the first radio frequency chain switches from the first band to the fourth band, and the second radio frequency chain switches from the second band to the third band. The terminal device may skip uplink transmission in a target time interval, and a network device may not receive uplink transmission in a target time interval. The target time interval is a switching period corresponding to a switching manner that requires a shorter switching period in the two switching manners. In this way, time for skiping uplink transmission can be shortened, a waste of uplink transmission resources can be reduced, and uplink transmission performance can be improved.

FIG. 6

## Description

This application claims priority to Chinese Patent Application No. 202310413095.9, filed with the China National Intellectual Property Administration on April 10, 2023 and entitled "COMMUNICATION METHOD AND APPARATUS", and to Chinese Patent Application No. 202310548555.9, filed with the China National Intellectual Property Administration on May 15, 2023 and entitled "COMMUNICATION METHOD AND APPARATUS", both of which are incorporated herein by reference in their entireties.

## TECHNICAL FIELD

This application relates to the communication field, and in particular, to a communication method and apparatus.

## BACKGROUND

Currently, a radio frequency chain of a terminal device can switch between two bands. For example, when a first radio frequency chain of the terminal device switches from a band A to a band B, the terminal device may report, to a network device, a switching period required by the first radio frequency chain to switch from the band A to the band B. The terminal device reserves an uplink transmission resource in a specific time interval, and does not perform uplink transmission in the reserved uplink transmission resource.

However, when the terminal device switches between a plurality of bands, how to reduce a waste of uplink transmission resources is a technical problem to be resolved.

## SUMMARY

Embodiments of this application provide a communication method and apparatus, to reduce a waste of uplink transmission resources.

To achieve the foregoing objective, this application uses the following technical solutions.

According to a first aspect, a communication method is provided. The method includes: A terminal device receives indication information. The indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The terminal device skips uplink transmission in a target time interval. The target time interval is a minimum value in first time and second time, the first time is a maximum value in a first switching period and a second switching period, and the second time is a maximum value in a third switching period and a fourth switching period. The first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

It can be learned from the methods according to the first aspect and the second aspect that the terminal device may perform uplink switching from the first band and the second band to the third band and the fourth band in two switching manners: A first radio frequency chain switches from the first band to the third band, and a second radio frequency chain switches from the second band to the fourth band; or the first radio frequency chain switches from the first band to the fourth band, and the second radio frequency chain switches from the second band to the third band. The terminal device may skip uplink transmission in the target time interval, and a network device may not receive uplink transmission in the target time interval. The target time interval is a switching period corresponding to a switching manner that requires a shorter switching period in the two switching manners. In this way, time for skiping uplink transmission can be shortened, a waste of uplink transmission resources can be reduced, and uplink transmission performance can be improved.

In a possible design solution, a first timing advance TA corresponding to the first band, a second TA corresponding to the second band, a third TA corresponding to the third band, and a fourth TA corresponding to the fourth band belong to a same timing advance group TAG.

In a possible design solution, the method according to the first aspect may further include: The terminal device sends first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

In other words, the network device may determine, based on the first capability information sent by the terminal device, that the terminal device has any capability indicated by the first capability information. In this way, the network device may schedule an uplink transmission resource based on the capability of the terminal device.

Optionally, the method according to the first aspect may further include: The terminal device sends second capability information. The second capability information indicates at least one of the following: The terminal device supports the first band pair, the second band pair, the third band pair, and the fourth band pair; or the first switching period, the second switching period, the third switching period, and the fourth switching period, which are used by the network device to determine a value of the target time interval. The first switching period, the second switching period, the third switching period, and the fourth switching period may be preconfigured in the network device, or predefined in a protocol. This is not limited.

Optionally, the method according to the first aspect may further include: The terminal device receives configuration information. The configuration information indicates that the capability indicated by the first capability information takes effect. In other words, whether the capability of skiping the uplink transmission by the terminal device in the target time interval takes effect may be configured by using the configuration information sent by the network device. Alternatively, the network device may consider by default that the capability indicated by the first capability information takes effect. In this case, the terminal device may no longer perform reporting, to reduce overheads.

In a possible design solution, the indication information is carried in at least one of the following: downlink control information DCI or radio resource control RRC, to reduce implementation difficulty, or may be carried in a new information element, to improve implementation flexibility. This is not limited.

In a possible design solution, the uplink transmission includes at least one of the following: a physical random access channel PRACH, a physical uplink control channel PUCCH, a physical uplink shared channel PUSCH, or a sounding reference signal SRS. In other words, existing signaling or an existing message may be applied for uplink transmission with switching performed at a minimum time interval, or new signaling or a new message may be applied, to implement decoupling from an existing transmission, making the transmission manner more flexible.

According to a second aspect, a communication method is provided. The method includes: A network device sends indication information. The indication information indicates a terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The network device skips receiving uplink transmission in a target time interval. The target time interval is a minimum value in first time and second time, the first time is a maximum value in a first switching period and a second switching period, and the second time is a maximum value in a third switching period and a fourth switching period. The first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, a first timing advance TA corresponding to the first band, a second TA corresponding to the second band, a third TA corresponding to the third band, and a fourth TA corresponding to the fourth band belong to a same timing advance group TAG.

In a possible design solution, the method according to the second aspect may further include: The network device receives first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the method according to the second aspect may further include: The network device receives second capability information. The second capability information indicates at least one of the following: The terminal device supports the first band pair, the second band pair, the third band pair, and the fourth band pair; or the first switching period, the second switching period, the third switching period, and the fourth switching period.

Optionally, the method according to the second aspect may further include: The network device sends configuration information. The configuration information indicates that the capability indicated by the first capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the second aspect, refer to the technical effect of the communication method according to the first aspect. Details are not described herein.

According to a third aspect, a communication method is provided. The method includes: A terminal device receives indication information.

The indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. A first band pair is the first band and the third band, a second band pair is the second band and the fourth band, a third band pair is the first band and the fourth band, and a fourth band pair is the second band and the third band. A first switching period is a switching period of the first band pair, a second switching period is a switching period of the second band pair, a third switching period is a switching period of the third band pair, and a fourth switching period is a switching period of the fourth band pair; and first time is a maximum value in the first switching period and the second switching period, and second time is a maximum value in the third switching period and the fourth switching period. The terminal device skips uplink transmission in a target time interval.

The target time interval is at least one of the following: a sum of a preset time interval and a minimum value in the first time and the second time; or a minimum value in third time and fourth time, where the third time is a maximum value in the second switching period and a sum of the first switching period and the preset time interval, and the fourth time is a maximum value in the fourth switching period and a sum of the third switching period and the preset time interval; or a minimum value in the first time and fifth time, where the fifth time is a sum of the second time and the preset time interval.

In a possible design solution, at least one timing advance TA in a first TA corresponding to the first band, a second TA corresponding to the second band, a third TA corresponding to the third band, and a fourth TA corresponding to the fourth band belongs to a first timing advance group TAG, and a TA other than the at least one TA in the first TA, the second TA, the third TA, and the fourth TA belongs to a second TAG. That is, the first TA, the second TA, the third TA, and the fourth TA belong to different TAGs.

In a possible design solution, the method according to the third aspect may further include: The terminal device sends first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the method according to the third aspect may further include: The terminal device sends second capability information. The second capability information indicates at least one of the following: The terminal device supports the first band pair, the second band pair, the third band pair, and the fourth band pair; or the first switching period, the second switching period, the third switching period, and the fourth switching period.

Optionally, the method according to the third aspect may further include: The terminal device receives configuration information. The configuration information indicates that the capability indicated by the first capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the third aspect, refer to the technical effect of the communication method according to the first aspect. Details are not described herein.

According to a fourth aspect, a communication method is provided. The method includes: A network device sends indication information. The indication information indicates a terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. A first band pair is the first band and the third band, a second band pair is the second band and the fourth band, a third band pair is the first band and the fourth band, and a fourth band pair is the second band and the third band. A first switching period is a switching period of the first band pair, a second switching period is a switching period of the second band pair, a third switching period is a switching period of the third band pair, and a fourth switching period is a switching period of the fourth band pair; and first time is a maximum value in the first switching period and the second switching period, and second time is a maximum value in the third switching period and the fourth switching period. The network device skips receiving uplink transmission in a target time interval.

The target time interval is at least one of the following: a sum of a preset time interval and a minimum value in the first time and the second time; or a minimum value in third time and fourth time, where the third time is a maximum value in the second switching period and a sum of the first switching period and the preset time interval, and the fourth time is a maximum value in the fourth switching period and a sum of the third switching period and the preset time interval; or a minimum value in the first time and fifth time, where the fifth time is a sum of the second time and the preset time interval.

In a possible design solution, at least one timing advance TA in a first TA corresponding to the first band, a second TA corresponding to the second band, a third TA corresponding to the third band, and a fourth TA corresponding to the fourth band belongs to a first timing advance group TAG, and a TA other than the at least one TA in the first TA, the second TA, the third TA, and the fourth TA belongs to a second TAG.

In a possible design solution, the method according to the fourth aspect may further include: The network device receives first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the method according to the fourth aspect may further include: The network device receives second capability information. The second capability information indicates at least one of the following: The terminal device supports the first band pair, the second band pair, the third band pair, and the fourth band pair; or the first switching period, the second switching period, the third switching period, and the fourth switching period.

Optionally, the method according to the fourth aspect may further include: The network device sends configuration information. The configuration information indicates that the capability indicated by the first capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the fourth aspect, refer to the technical effect of the communication method according to the first aspect and the third aspect. Details are not described herein.

According to a fifth aspect, a communication method is provided. The method includes: A terminal device receives indication information. The indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The terminal device skips uplink transmission in a target time interval.

In a possible design solution, the method according to the fifth aspect may further include: The terminal device sends first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band; or when the first radio frequency chain completes uplink switching, the second radio frequency chain starts to perform uplink switching; or the first radio frequency chain and the second radio frequency chain perform uplink switching sequentially.

In a possible design solution, the target time interval is a maximum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

It may be understood that the terminal device may skip uplink transmission in the target time interval, and similarly, a network device may not receive uplink transmission in the target time interval. To avoid ambiguity, that is, a specific band pair for performing switching by the radio frequency chain, the target time interval is a switching period corresponding to a switching manner that requires a longer switching period in two switching manners. In this way, the band pair for performing radio frequency chain switching by the radio frequency chain may not be distinguished, thereby saving additional signaling overheads, and improving uplink transmission performance.

In a possible design solution, the target time interval is a minimum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

It may be understood that the terminal device may skip uplink transmission in the target time interval, and a network device may not receive uplink transmission in the target time interval. The target time interval is a switching period corresponding to a switching manner that requires a shorter switching period in two switching manners. In this way, time for skiping uplink transmission can be shortened, a waste of uplink transmission resources can be reduced, and uplink transmission performance can be improved.

In a possible design solution, the target time interval is a maximum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

It may be understood that, when the second band and the fourth band are a same band, the terminal device performs uplink switching from the first band and the third band to the third band and the second band. In this case, the terminal device may skip uplink transmission in the target time interval, and a network device may not receive uplink transmission in the target time interval. To avoid ambiguity, that is, a specific band pair for performing switching by the radio frequency chain, the target time interval is a switching period corresponding to a switching manner that requires a longer switching period in two switching manners. In this way, the band pair for performing radio frequency chain switching by the radio frequency chain may not be distinguished, thereby saving additional signaling overheads, and improving uplink transmission performance.

In a possible design solution, the target time interval is a minimum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

It may be understood that, when the second band and the fourth band are a same band, the terminal device performs uplink switching from the first band and the third band to the third band and the second band. In this case, the terminal device may skip uplink transmission in the target time interval, and a network device may not receive uplink transmission in the target time interval. The target time interval is a switching period corresponding to a switching manner that requires a shorter switching period in two switching manners. In this way, time for skiping uplink transmission can be shortened, a waste of uplink transmission resources can be reduced, and uplink transmission performance can be improved.

Optionally, the method according to the fifth aspect may further include: The terminal device sends second capability information. The second capability information indicates at least one of the following: The terminal device supports the first band pair, the second band pair, the third band pair, and the fourth band pair; or the first switching period, the second switching period, the third switching period, and the fourth switching period.

Optionally, the method according to the fifth aspect may further include: The terminal device receives first configuration information. The first configuration information indicates that the capability indicated by the first capability information takes effect.

Optionally, the method according to the fifth aspect may further include: The terminal device receives second configuration information. The second configuration information indicates that the capability indicated by the third capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the fifth aspect, refer to the technical effect of the communication method according to the first aspect. Details are not described herein.

According to a sixth aspect, a communication method is provided. The method includes: A network device sends indication information. The indication information indicates a terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The network device skips receiving uplink transmission in a target time interval.

In a possible design solution, the method according to the sixth aspect may further include: The network device receives first capability information. The first capability information indicates at least one of the following: The terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band; or when the first radio frequency chain completes uplink switching, the second radio frequency chain starts to perform uplink switching; or the first radio frequency chain and the second radio frequency chain perform uplink switching sequentially.

In a possible design solution, the target time interval is a maximum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the target time interval is a minimum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the target time interval is a maximum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

In a possible design solution, the target time interval is a minimum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

Optionally, the method according to the sixth aspect may further include: The network device receives second capability information. The second capability information indicates at least one of the following: The terminal device supports the first band pair, the second band pair, the third band pair, and the fourth band pair; or the first switching period, the second switching period, the third switching period, and the fourth switching period.

Optionally, the method according to the sixth aspect may further include: The network device sends first configuration information. The first configuration information indicates that the capability indicated by the first capability information takes effect.

Optionally, the method according to the sixth aspect may further include: The terminal device receives second configuration information. The second configuration information indicates that the capability indicated by the third capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the sixth aspect, refer to the technical effect of the communication method according to the first aspect and the fifth aspect. Details are not described herein.

According to a seventh aspect, a communication apparatus is provided. The communication apparatus includes modules configured to perform the method according to the first aspect, for example, a transceiver module and a processing module.

The transceiver module is configured to receive indication information. The indication information indicates the communication apparatus according to the seventh aspect to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The communication apparatus skips uplink transmission in a target time interval. The target time interval is a minimum value in first time and second time, the first time is a maximum value in a first switching period and a second switching period, and the second time is a maximum value in a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the processing module is configured to control the transceiver module to send first capability information. The first capability information indicates at least one of the following: The communication apparatus according to the seventh aspect skips uplink transmission in the target time interval; or the communication apparatus completes uplink switching from the first band and the second band to the third band and the fourth band in the target time interval; or the communication apparatus does not perform uplink transmission in a time period that partially or completely overlaps the target time interval; or a first radio frequency chain and a second radio frequency chain of the communication apparatus do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the processing module is further configured to control the transceiver module to send second capability information. The second capability information indicates at least one of the following: The communication apparatus according to the seventh aspect supports the first band pair, the second band pair, the third band pair, and the fourth band pair; or the first switching period, the second switching period, the third switching period, and the fourth switching period.

Optionally, the transceiver module is further configured to receive configuration information. The configuration information indicates that the capability indicated by the first capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

Optionally, the transceiver module may include a sending module and a receiving module. The sending module is configured to implement a sending function of the communication apparatus according to the seventh aspect, and the receiving module is configured to implement a receiving function of the communication apparatus in the seventh aspect.

Optionally, the communication apparatus according to the seventh aspect may further include a storage module. The storage module stores a program or instructions. When the processing module executes the program or the instructions, the communication apparatus is enabled to perform the method according to the first aspect.

It may be understood that the communication apparatus according to the seventh aspect may be a terminal device, may be a chip (system) or another part or component that may be disposed in the terminal device, or may be an apparatus including the terminal device. This is not limited in this application.

In addition, for technical effect of the communication apparatus according to the seventh aspect, refer to the technical effect of the method according to the first aspect. Details are not described herein.

According to an eighth aspect, a communication apparatus is provided. The communication apparatus includes modules configured to perform the method according to the second aspect, for example, a transceiver module and a processing module.

The processing module is configured to control the transceiver module to send indication information. The indication information indicates a terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The network device skips receiving uplink transmission in a target time interval. The target time interval is a minimum value in first time and second time, the first time is a maximum value in a first switching period and a second switching period, and the second time is a maximum value in a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the transceiver module is configured to receive first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the transceiver module is further configured to receive second capability information. The second capability information indicates at least one of the following: The terminal device supports the first band pair, the second band pair, the third band pair, and the fourth band pair; or the first switching period, the second switching period, the third switching period, and the fourth switching period.

Optionally, the processing module is further configured to control the transceiver module to send configuration information. The configuration information indicates that the capability indicated by the first capability information takes effect.

In a possible design solution, the indication information is carried in at least one of the following: downlink control information DCI or radio resource control RRC.

In a possible design solution, the uplink transmission includes at least one of the following:
a physical random access channel PRACH, a physical uplink control channel PUCCH, a physical uplink shared channel PUSCH, or a sounding reference signal SRS.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or the instructions, the communication apparatus is enabled to perform the method according to the second aspect.

It may be understood that the communication apparatus according to the eighth aspect may be a network device, may be a chip (system) or another part or component that may be disposed in the network device, or may be an apparatus including the network device. This is not limited in this application.

In addition, for technical effect of the communication apparatus according to the eighth aspect, refer to the technical effect of the method according to the second aspect. Details are not described herein.

According to a ninth aspect, a communication apparatus is provided. The communication apparatus includes modules configured to perform the method according to the third aspect, for example, a transceiver module and a processing module.

The transceiver module is configured to receive indication information. The indication information indicates the communication apparatus according to the ninth aspect to send first transmission on a first band, send second transmission on a second band, send third transmission on a third band, and send fourth transmission on a fourth band, and time domain locations of the first transmission and the second transmission are earlier than time domain locations of the third transmission and the fourth transmission. A first band pair is the first band and the third band, a second band pair is the second band and the fourth band, a third band pair is the first band and the fourth band, and a fourth band pair is the second band and the third band; a first switching period is a switching period of the first band pair, a second switching period is a switching period of the second band pair, a third switching period is a switching period of the third band pair, and a fourth switching period is a switching period of the fourth band pair; and first time is a maximum value in the first switching period and the second switching period, and second time is a maximum value in the third switching period and the fourth switching period. The communication apparatus according to the ninth aspect skips uplink transmission in a target time interval. The target time interval is at least one of the following: a sum of a preset time interval and a minimum value in the first time and the second time; or a minimum value in third time and fourth time, where the third time is a maximum value in the second switching period and a sum of the first switching period and the preset time interval, and the fourth time is a maximum value in the fourth switching period and a sum of the third switching period and the preset time interval; or a minimum value in the first time and fifth time, where the fifth time is a sum of the second time and the preset time interval.

In a possible design solution, at least one timing advance TA in a first TA corresponding to the first band, a second TA corresponding to the second band, a third TA corresponding to the third band, and a fourth TA corresponding to the fourth band belongs to a first timing advance group TAG, and a TA other than the at least one TA in the first TA, the second TA, the third TA, and the fourth TA belongs to a second TAG.

In a possible design solution, the processing module is configured to control the transceiver module to send first capability information. The first capability information indicates at least one of the following: The communication apparatus according to the ninth aspect skips uplink transmission in the target time interval; or the communication apparatus completes uplink switching from the first band and the second band to the third band and the fourth band in the target time interval; or the communication apparatus does not perform uplink transmission in a time period that partially or completely overlaps the target time interval; or a first radio frequency chain and a second radio frequency chain of the communication apparatus do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the processing module is further configured to control the transceiver module to send second capability information. The second capability information indicates at least one of the following: The communication apparatus according to the ninth aspect supports the first band pair, the second band pair, the third band pair, and the fourth band pair; or the first switching period, the second switching period, the third switching period, and the fourth switching period.

Optionally, the transceiver module is further configured to receive configuration information. The configuration information indicates that the capability indicated by the first capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module, and the storage module stores a program or instructions. When the processing module executes the program or the instructions, the communication apparatus is enabled to perform the method according to the third aspect.

It may be understood that the communication apparatus according to the ninth aspect may be a terminal device, may be a chip (system) or another part or component that may be disposed in the terminal device, or may be an apparatus including the terminal device. This is not limited in this application.

In addition, for technical effect of the communication apparatus according to the ninth aspect, refer to the technical effect of the method according to the third aspect. Details are not described herein.

According to a tenth aspect, a communication apparatus is provided. The communication apparatus includes modules configured to perform the method according to the fourth aspect, for example, a transceiver module and a processing module.

The processing module is configured to control the transceiver module to send indication information. The indication information indicates a terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. A first band pair is the first band and the third band, a second band pair is the second band and the fourth band, a third band pair is the first band and the fourth band, and a fourth band pair is the second band and the third band; a first switching period is a switching period of the first band pair, a second switching period is a switching period of the second band pair, a third switching period is a switching period of the third band pair, and a fourth switching period is a switching period of the fourth band pair; and first time is a maximum value in the first switching period and the second switching period, and second time is a maximum value in the third switching period and the fourth switching period. The network device skips receiving uplink transmission in a target time interval. The target time interval is at least one of the following: a sum of a preset time interval and a minimum value in the first time and the second time; or a minimum value in third time and fourth time, where the third time is a maximum value in the second switching period and a sum of the first switching period and the preset time interval, and the fourth time is a maximum value in the fourth switching period and a sum of the third switching period and the preset time interval; or a minimum value in the first time and fifth time, where the fifth time is a sum of the second time and the preset time interval.

In a possible design solution, at least one timing advance TA in a first TA corresponding to the first band, a second TA corresponding to the second band, a third TA corresponding to the third band, and a fourth TA corresponding to the fourth band belongs to a first timing advance group TAG, and a TA other than the at least one TA in the first TA, the second TA, the third TA, and the fourth TA belongs to a second TAG.

In a possible design solution, the transceiver module is configured to receive first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the transceiver module is further configured to receive second capability information. The second capability information indicates at least one of the following: The terminal device supports the first band pair, the second band pair, the third band pair, and the fourth band pair; or the first switching period, the second switching period, the third switching period, and the fourth switching period.

Optionally, the processing module is further configured to control the transceiver module to send configuration information. The configuration information indicates that the capability indicated by the first capability information takes effect.

In a possible design solution, the indication information is carried in at least one of the following: downlink control information DCI or radio resource control RRC.

Optionally, the transceiver module may include a sending module and a receiving module. The sending module is configured to implement a sending function of the communication apparatus according to the tenth aspect, and the receiving module is configured to implement a receiving function of the communication apparatus according to the tenth aspect.

Optionally, the communication apparatus according to the tenth aspect may further include a storage module, and the storage module stores a program or instructions. When the processing module executes the program or the instructions, the communication apparatus is enabled to perform the method according to the fourth aspect.

It may be understood that the communication apparatus according to the tenth aspect may be a network device, may be a chip (system) or another part or component that may be disposed in the network device, or may be an apparatus including the network device. This is not limited in this application.

In addition, for technical effect of the communication apparatus according to the tenth aspect, refer to the technical effect of the method according to the first aspect and the fourth aspect. Details are not described herein.

According to an eleventh aspect, a communication apparatus is provided. The communication apparatus includes modules configured to perform the method according to the fifth aspect, for example, a transceiver module and a processing module.

The transceiver module is configured to receive indication information. The indication information indicates the communication apparatus according to the eleventh aspect to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The communication apparatus skips uplink transmission in a target time interval.

In a possible design solution, the processing module is configured to control the transceiver module to send first capability information. The first capability information indicates at least one of the following: The communication apparatus according to the eleventh aspect skips uplink transmission in the target time interval; or the communication apparatus completes uplink switching from the first band and the second band to the third band and the fourth band in the target time interval; or the communication apparatus does not perform uplink transmission in a time period that partially or completely overlaps the target time interval; or a first radio frequency chain and a second radio frequency chain of the communication apparatus do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band; or when the first radio frequency chain completes uplink switching, the second radio frequency chain starts to perform uplink switching; or the first radio frequency chain and the second radio frequency chain perform uplink switching sequentially.

In a possible design solution, the target time interval is a maximum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the target time interval is a minimum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the target time interval is a maximum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

In a possible design solution, the target time interval is a minimum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

Optionally, the processing module is further configured to control the transceiver module to send second capability information. The second capability information indicates at least one of the following: The communication apparatus according to the eleventh aspect supports the first band pair, the second band pair, the third band pair, and the fourth band pair; or the first switching period, the second switching period, the third switching period, and the fourth switching period.

Optionally, the transceiver module is further configured to receive first configuration information. The first configuration information indicates that the capability indicated by the first capability information takes effect.

Optionally, the transceiver module is further configured to receive second configuration information. The second configuration information indicates that the capability indicated by the third capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the eleventh aspect, refer to the technical effect of the communication method according to the fifth aspect. Details are not described herein.

According to a twelfth aspect, a communication apparatus is provided. The communication apparatus includes modules configured to perform the method according to the sixth aspect, for example, a transceiver module and a processing module.

The processing module is configured to control the transceiver module to send indication information. The indication information indicates a terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission. The communication apparatus according to the twelfth aspect skips receiving uplink transmission in a target time interval.

In a possible design solution, the transceiver module is configured to receive first capability information. The first capability information indicates at least one of the following: The terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band; or when the first radio frequency chain completes uplink switching, the second radio frequency chain starts to perform uplink switching; or the first radio frequency chain and the second radio frequency chain perform uplink switching sequentially.

In a possible design solution, the target time interval is a maximum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the target time interval is a minimum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

In a possible design solution, the target time interval is a maximum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

In a possible design solution, the target time interval is a minimum value in first time and second time, the first time is a first switching period, and the second time is a sum of a third switching period and a fourth switching period; and the first switching period is a switching period of a first band pair, the third switching period is a switching period of a third band pair, and the fourth switching period is a switching period of a fourth band pair. The first band pair is the first band and the third band, the third band pair is the first band and the fourth band, and the fourth band pair is the second band and the third band, where the second band and the fourth band are a same band.

Optionally, the transceiver module is further configured to receive second capability information. The second capability information indicates at least one of the following: The terminal device supports the first band pair, the second band pair, the third band pair, and the fourth band pair; or the first switching period, the second switching period, the third switching period, and the fourth switching period.

Optionally, the processing module is further configured to control the transceiver module to send first configuration information. The first configuration information indicates that the capability indicated by the first capability information takes effect.

Optionally, the processing module is further configured to control the transceiver module to send second configuration information. The second configuration information indicates that the capability indicated by the third capability information takes effect.

In a possible design solution, the indication information is carried in at least one of the following: downlink control information DCI or radio resource control RRC.

In a possible design solution, the uplink transmission includes at least one of the following: a physical random access channel PRACH, a physical uplink control channel PUCCH, a physical uplink shared channel PUSCH, or a sounding reference signal SRS.

For other technical effect of the communication method according to the twelfth aspect, refer to the technical effect of the communication method according to the sixth aspect. Details are not described herein.

According to a thirteenth aspect, a communication apparatus is provided. The communication apparatus includes a processor. The processor is configured to perform the method according to any one of the possible implementations of the first aspect to the sixth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In a possible design solution, the communication apparatus according to the thirteenth aspect may further include a memory. The memory may be integrated with the processor, or may be disposed separately from the processor. The memory may be configured to store a computer program and/or data in the method according to any one of the first aspect to the sixth aspect.

In this embodiment of this application, the communication apparatus according to the thirteenth aspect may be the network device according to any one of the first aspect to the sixth aspect, the chip (system) or another part or component that may be disposed in the network device, or the apparatus including the network device.

In addition, for technical effect of the communication apparatus according to the thirteenth aspect, refer to the technical effect of the method according to any one of the implementations of the first aspect to the sixth aspect. Details are not described herein.

According to a fourteenth aspect, a communication apparatus is provided. The communication apparatus includes a processor. The processor is coupled to a memory, and the processor is configured to execute a computer program stored in the memory, to enable the communication apparatus to perform the method according to any one of the possible implementations of the first aspect to the sixth aspect.

In a possible design solution, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In this embodiment of this application, the communication apparatus according to the fourteenth aspect may be the network device according to any one of the first aspect to the sixth aspect, the chip (system) or another part or component that may be disposed in the network device, or the apparatus including the network device.

In addition, for technical effect of the communication apparatus according to the fourteenth aspect, refer to the technical effect of the method according to any one of the implementations of the first aspect to the sixth aspect. Details are not described herein.

According to a fifteenth aspect, a communication apparatus is provided, and includes a processor and a memory. The memory is configured to store a computer program. When the processor executes the computer program, the communication apparatus is enabled to perform the method according to any one of the implementations of the first aspect to the sixth aspect.

In a possible design solution, the communication apparatus according to the fifteenth aspect may further include a transceiver. The transceiver may be a transceiver circuit or an interface circuit. The transceiver may be used by the communication apparatus according to the fifteenth aspect to communicate with another communication apparatus.

In this embodiment of this application, the communication apparatus according to the fifteenth aspect may be the network device according to any one of the first aspect to the sixth aspect, the chip (system) or another part or component that may be disposed in the network device, or the apparatus including the network device.

In addition, for technical effect of the communication apparatus according to the fifteenth aspect, refer to the technical effect of the method according to any one of the implementations of the first aspect to the sixth aspect. Details are not described herein.

According to a sixteenth aspect, a communication apparatus is provided, and includes a processor. The processor is configured to: be coupled to a memory, and after reading a computer program in the memory, perform the method according to any one of the implementations of the first aspect to the sixth aspect based on the computer program.

In a possible design solution, the communication apparatus according to the sixteenth aspect may further include a transceiver. The transceiver may be a transceiver circuit or an interface circuit. The transceiver may be used by the communication apparatus according to the sixteenth aspect to communicate with another communication apparatus.

In this embodiment of this application, the communication apparatus according to the sixteenth aspect may be the network device according to any one of the first aspect to the sixth aspect, the chip (system) or another part or component that may be disposed in the network device, or the apparatus including the network device.

In addition, for technical effect of the communication apparatus according to the sixteenth aspect, refer to the technical effect of the method according to any one of the implementations of the first aspect to the sixth aspect. Details are not described herein.

According to a seventeenth aspect, a communication system is provided. The communication system includes the terminal device according to the first aspect, the third aspect, or the fifth aspect, and/or the network device according to the second aspect, the fourth aspect, or the sixth aspect.

According to an eighteenth aspect, a computer-readable storage medium is provided, and includes a computer program or instructions. When the computer program or the instructions are run on a computer, the computer is enabled to perform the method according to any one of the possible implementations of the first aspect to the sixth aspect.

According to a nineteenth aspect, a computer program product is provided, and includes a computer program or instructions. When the computer program or the instructions are run on a computer, the computer is enabled to perform the method according to any one of the possible implementations of the first aspect to the sixth aspect.

## BRIEF DESCRIPTION OF DRAWINGS

FIG. 1a is a diagram 1 of switching between three bands by a terminal device;
FIG. 1b is a diagram 2 of switching between three bands by a terminal device;
FIG. 2 is a diagram of switching between four bands by a terminal device;
FIG. 3 is a diagram 1 of a manner of switching between four bands;
FIG. 4 is a diagram 2 of a manner of switching between four bands;
FIG. 5 is a diagram of an architecture of a communication system according to an embodiment of this application;
FIG. 6 is a schematic flowchart 1 of a communication method according to an embodiment of this application;
FIG. 7 is a schematic flowchart 2 of a communication method according to an embodiment of this application;
FIG. 8 is a diagram of a preset time interval T1;
FIG. 9 is a schematic flowchart 3 of a communication method according to an embodiment of this application;
FIG. 10 is a diagram 3 of a manner of switching between four bands;
FIG. 11 is a diagram 4 of a manner of switching between four bands;
FIG. 12 is a diagram 3 of a manner of switching between three bands;
FIG. 13 is a diagram 4 of a manner of switching between three bands;
FIG. 14 is a schematic flowchart 4 of a communication method according to an embodiment of this application;
FIG. 15 is a diagram 1 of a structure of a communication apparatus according to an embodiment of this application; and
FIG. 16 is a diagram 2 of a structure of a communication apparatus according to an embodiment of this application.

## DESCRIPTION OF EMBODIMENTS

For ease of understanding, the following first describes technical terms in embodiments of this application.

1. Radio frequency chain (radio frequency chain, RF chain)

The radio frequency chain is a cascade of electronic components and subunits, and may include radio frequency components such as an antenna, a power amplifier, a transmitter, a power supply, a phase-locked loop, and a local oscillator. Currently, most terminal devices can perform uplink transmission by using two radio frequency chains. One radio frequency chain supports only one band (band) at a moment, and each band supports a specific frequency range. With large-scale deployment of 5G and allocation of spectra, operators have more abundant spectrum resources in an uplink. To fully use spectrum resources, the 3rd generation partnership project (3rd generation partnership project, 3GPP) is studying and supporting a technology for dynamic switching between three or four bands by two radio frequency chains.

For example, one radio frequency chain is used as an example. If a network device schedules a terminal device to switch from a band A to a band B for uplink transmission, the radio frequency chain needs to switch from the band A to the band B. During band switching, because radio frequency retuning (RF retuning) of the radio frequency chain affects uplink transmission efficiency and performance, the radio frequency retuning may be time required for a local oscillator frequency to stabilize after the band switching.

2. Band pair

A switch-from (switch-from) band and a switch-to (switch-to) band of one radio frequency chain are referred to as a band pair (band pair). Different band pairs may correspond to different switching periods (switching period). The terminal device may report a supportable band pair and a switching period corresponding to each band pair to the network device by using a terminal capability.

For example, the band A and the band B are one band pair, which may be denoted as a band pair AB. The terminal device sends first uplink transmission on the band A, and the terminal device sends second uplink transmission on the band B. If a time interval between the first uplink transmission and the second uplink transmission is less than a switching period of the band pair AB, the terminal device occupies a time domain resource allocated by the network device to the band A for the first uplink transmission or a time domain resource allocated by the network device to the band B for the second uplink transmission, to perform radio frequency chain switching. It may be understood that, whether the terminal device occupies a resource of the band A or the band B is configured by using radio resource control (radio resource control, RRC) sent by the network device.

Two radio frequency chains of the terminal device may respectively perform uplink switching between two band pairs in the following two cases:

Case 1: The two radio frequency chains switch between three bands.

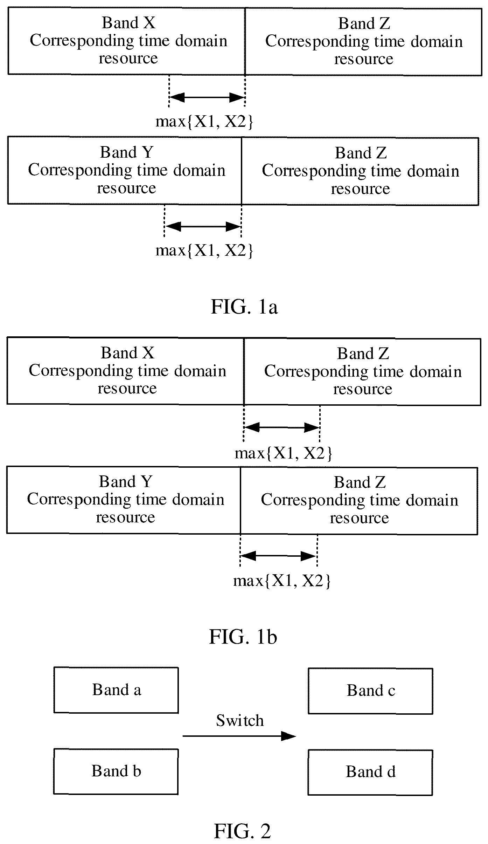

For example, as shown in FIG. 1a and FIG. 1b, a radio frequency chain #1 performs switching on a band pair XZ, and a switching period of the band pair XZ is X1; and a radio frequency chain #2 performs switching on a band pair YZ, and a switching period of the band pair YZ is X2. That is, the radio frequency chain #1 sends uplink transmission on a band X before switching, and sends uplink transmission on a band Z after switching; and the radio frequency chain #2 sends uplink transmission on a band Y before switching, and sends uplink transmission on the band Z after switching.

It may be understood that the two radio frequency chains of the terminal device are coupled, and the other radio frequency chain cannot send uplink transmission in a band switching period of one radio frequency chain. Therefore, if $X1 \neq X2$, the network device determines $\max\{X1, X2\}$ as a target switching period, and the radio frequency chain #1 and the radio frequency chain #2 do not send uplink transmission in the target switching period.

Case 2: The two radio frequency chains switch between four bands.

For example, as shown in FIG. 2, when the radio frequency chain #1 and the radio frequency chain #2 switch from a band a and a band b to a band c and a band d to send uplink transmission, the network device schedules the terminal device to send uplink transmission on the band a and the band b, and then send uplink transmission on the band c and the band d. If the terminal device reports a supported band pair ac, band pair bd, band pair ad, and band pair bc, the network device does not indicate a specific band pair on which the radio frequency chain #1 performs uplink switching, and similarly, does not indicate a specific band pair on which the radio frequency chain #2 performs uplink switching. As shown in Table 1, the terminal device may report the supported band pair ac, band pair bd, band pair ad, and band ac, and a switching period of each band pair, for example, a switching period of the band pair ac $T_{switch\_a-c}$, a switching period of the band pair bd $T_{switch\_b-d}$, a switching period of the band pair ad $T_{switch\_a-d}$, and a switching period of the band bc $T_{switch\_b-c}$.

Table 1

| Band pair | Switching period |
| --- | --- |
| Band pair ac | $T_{switch\_a-c}$ |
| Band pair bd | $T_{switch\_b-d}$ |
| Band pair ad | $T_{switch\_a-d}$ |
| Band pair bc | $T_{switch\_b-c}$ |

In this case, the radio frequency chain #1 and the radio frequency chain #2 have two switching manners.

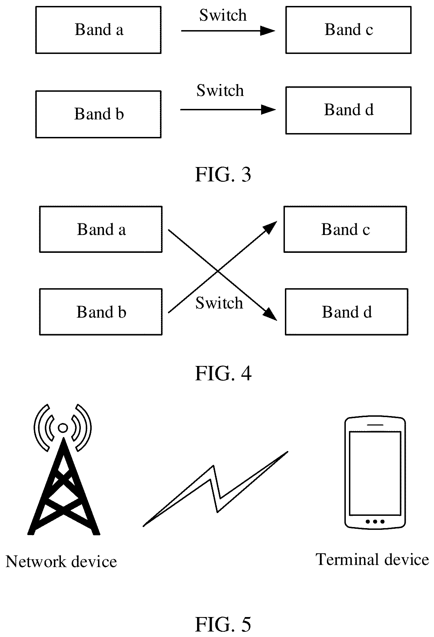

Manner 1: As shown in FIG. 3, the radio frequency chain #1 switches from the band a to the band c, and the radio frequency chain #2 switches from the band b to the band d.

That is, the radio frequency chain #1 performs uplink switching on the band pair ac, and the radio frequency chain #2 performs uplink switching on the band pair bd.

Manner 2: As shown in FIG. 4, the radio frequency chain #1 switches from the band a to the band d, and the radio frequency chain #2 switches from the band b to the band c.

That is, the radio frequency chain #1 performs uplink switching on the band pair ad, and the radio frequency chain #2 performs uplink switching on the band pair bc.

The network device does not indicate or know whether the terminal device actually sends uplink transmission in the manner 1 or the manner 2. As a basic capability, the network device selects a maximum value $\max\{T_{switch\_a-c}, T_{switch\_b-d}, T_{switch\_a-d}, T_{switch-b-c}\}$ in the switching periods corresponding to the four band pairs as a target switching period, and the network device does not receive uplink transmission in the target switching period, or the terminal device does not send uplink transmission in the target switching period. In other words, the radio frequency chain #1 and the radio frequency chain #2 do not send uplink transmission in the target switching period.

However, if the terminal device actually performs radio frequency chain switching in a manner with a shorter switching period, the network device selects the maximum value in the switching periods corresponding to the four band pairs as the target switching period. This causes a large waste of uplink transmission resources, resulting in a decrease in an uplink throughput and a peak rate, and further deteriorating uplink transmission performance.

For example, assuming that $T_{switch\_a-c}$=35 $\mu$s, $T_{switch\_b-d}$=35 $\mu$s, $T_{switch\_a-d}$=140 $\mu$s, and $T_{switch\_b-d}$=140 $\mu$s, if the radio frequency chain #1 and the radio frequency chain #2 perform switching in the manner 1, a switching period of the manner 1 is 35 $\mu$s; or if the radio frequency chain #1 and the radio frequency chain #2 perform switching in the manner 2, a switching period of the manner 2 is 140 $\mu$s. In this case, the network device determines 140 $\mu$s as the target switching period, and does not receive uplink transmission in 140 $\mu$s. However, if the radio frequency chain #1 and the radio frequency chain #2 actually perform switching in the manner 1, uplink transmission resources in 105 $\mu$s are wasted.

In conclusion, for the foregoing technical problem, embodiments of this application provide the following technical solutions, to reduce a waste of uplink transmission resources.

The following describes the technical solutions in embodiments in this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, 4G, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship. It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of network architectures and emergence of new service scenarios, the technical solutions provided in embodiments of this application are also applicable to similar technical problems.

For ease of understanding of embodiments of this application, a communication system applicable to embodiments of this application is first described in detail by using a communication system shown in FIG. 5 as an example. For example, FIG. 5 is a diagram of an architecture of a communication system to which a communication method according to an embodiment of this application is applicable.

As shown in FIG. 5, the communication system mainly includes a network device and a terminal device.

The network device may be an access network (access network, AN) device, which may alternatively be referred to as a radio access network (radio access network, RAN) device. The RAN device may provide an access function for the terminal, and is responsible for functions such as radio resource management, quality of service (quality of service, QoS) management, and data compression and encryption on an air interface side. The RAN device may include a gNB in 5G, for example, an NR system, or one antenna panel or a group of antenna panels (including a plurality of antenna panels) of the gNB in 5G, or may be a network node that forms a gNB, a transmission point (transmission reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a core network element in 5G. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next-generation mobile communication system, for example, an access network device in 6G, for example, a base station in 6G. Alternatively, in a next-generation mobile communication system, the network apparatus may be named in another manner, which falls within the protection scope of embodiments of this application. This is not limited in this application. A specific technology and a specific device form that are used by the network device are not limited in embodiments of this application.

It may be understood that the network device may be connected to a core network device in a wireless or wired manner. The core network device and the network device may be different independent physical devices, or a function of the core network device and a logical function of the network device may be integrated into a same physical device, or some functions of the core network device and some functions of the network device may be integrated into one physical device.

The terminal device may be a terminal with a transceiver function, or may be a chip or a chip system that may be disposed in the terminal device. The terminal device may also be referred to as user equipment (user equipment, UE), an access terminal device, a subscriber unit (subscriber unit), a subscriber station, a mobile station (mobile station, MS), a mobile console, a remote station, a remote terminal device, a mobile device, a user terminal device, a terminal device, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal device, a computer with a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal in telemedicine (remote medical), a wireless terminal device in smart grid (smart grid), a wireless terminal device in transportation safety (transportation safety), a wireless terminal device in smart city (smart city), a wireless terminal device in smart home (smart home), a vehicle-mounted terminal device, a roadside unit (roadside unit, RSU) with a terminal device function, or the like. The terminal device in this application may alternatively be a vehicle-mounted module, a vehicle-mounted component, a vehicle-mounted chip, or a vehicle-mounted unit that is built in a vehicle as one or more components or units. A specific technology and a specific device form that are used by the terminal device are not limited in embodiments of this application.

The network device and the terminal device may be deployed on land, including an indoor or outdoor device, a handheld device, or a vehicle-mounted device; may be deployed on water; or may be deployed on an aircraft, an unmanned aerial vehicle, a balloon, or a satellite in the air. Application scenarios of the network device and the terminal device are not limited in embodiments of this application.

In the communication system, the terminal device may perform uplink switching from a first band and a second band to a third band and a fourth band in two switching manners: A first radio frequency chain switches from the first band to the third band, and a second radio frequency chain switches from the second band to the fourth band; or the first radio frequency chain switches from the first band to the fourth band, and the second radio frequency chain switches from the second band to the third band. The terminal device may skip uplink transmission in a target time interval, and the network device may not receive uplink transmission in a target time interval. The target time interval is a switching period corresponding to a switching manner that requires a shorter switching period in the two switching manners. In this way, time for skiping uplink transmission can be shortened, a waste of uplink transmission resources can be reduced, and uplink transmission performance can be improved.

It may be understood that FIG. 5 is a simplified diagram used as an example for ease of understanding. The communication system may further include another network device and/or another terminal device that are/is not shown in FIG. 5.

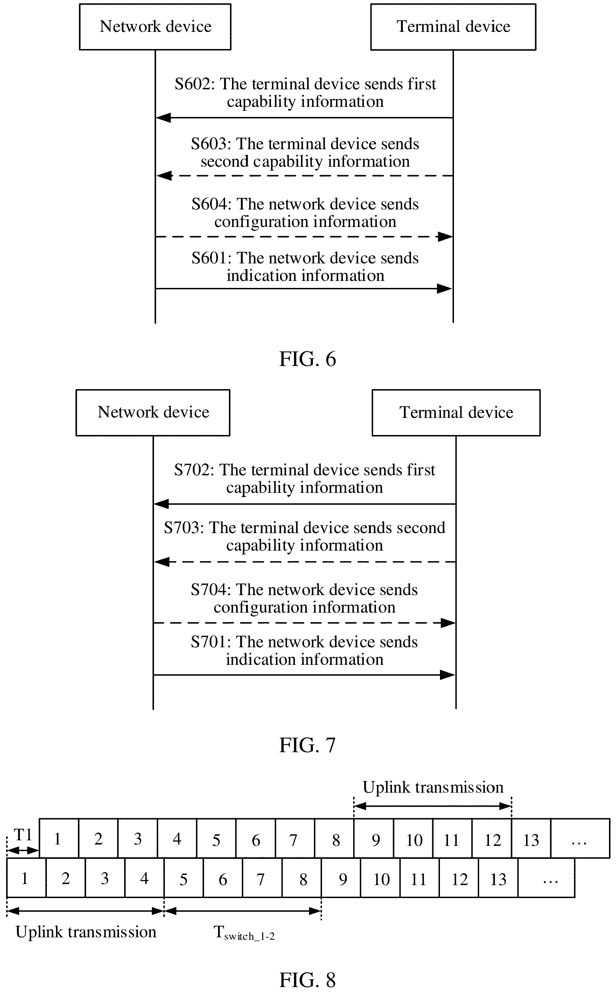

For ease of understanding, the following specifically describes a communication method according to embodiments of this application with reference to FIG. 6 to FIG. 14.

For example, FIG. 6 is a schematic flowchart 1 of a communication method according to an embodiment of this application. The method is applicable to communication between the network device and the terminal in the foregoing communication system. Specifically, as shown in FIG. 6, a procedure of the communication method is as follows.

S601: The network device sends indication information. The terminal device receives the indication information.

The indication information indicates the terminal device to send first transmission on a first band, send second transmission on a second band, send third transmission on a third band, and send fourth transmission on a fourth band.

The first transmission, the second transmission, the third transmission, and the fourth transmission are all uplink transmission. The uplink transmission may be understood as uplink signaling, an uplink channel, an uplink message, or uplink data sent by the terminal device, for example, a physical random access channel (physical random access channel, PRACH), a physical uplink control channel (physical uplink control channel, PUCCH), a physical uplink shared channel (physical uplink shared channel, PUSCH), or a sounding reference signal (sounding reference signal, SRS). This is not limited.

The first band, the second band, the third band, and the fourth band may be different bands, and time domain locations of the first transmission and the second transmission are earlier than time domain locations of the third transmission and the fourth transmission. In other words, the network device indicates that the terminal device needs to send uplink transmission in different bands at different time, to ensure transmission flexibility.

For example, it is assumed that the first transmission is a PUSCH, the second transmission is a PUCCH, the third transmission is an SRS, and the fourth transmission is a PRACH. The terminal device may send the PUSCH on the first band and a symbol #0 to a symbol #6, send the PUCCH on the second band and the symbol #0 to the symbol #6, send the SRS on the third band and a symbol #7 to a symbol #11, and send the PRACH on the fourth band and the symbol #7 to the symbol #11. Time domain locations of the symbol #0 to the symbol #6 are earlier than time domain locations of the symbol #7 to the symbol #11.

It may be understood that there may be one or more pieces of indication information. To be specific, uplink transmission is scheduled a plurality of times by using one indication, to reduce communication overheads. Alternatively, uplink transmission is scheduled a plurality of times respectively by using a plurality of indications, making transmission more flexible.

For example, the network device may send one piece of indication information, to schedule the terminal device to send the first transmission on the first band, send the second transmission on the second band, send the third transmission on the third band, and send the fourth transmission on the fourth band.

For another example, the network device may send four pieces of indication information: indication information #1, indication information #2, indication information #3, and indication information #4. The indication information #1 and the indication information #2 may be first sent, to respectively schedule the terminal device to send the first transmission and the second transmission on the first band and the second band. Then, the indication information #3 and the indication information #4 are sent, to respectively schedule the terminal device to send the third transmission and the fourth transmission on the third band and the fourth band.

The indication information may be carried in downlink control information DCI or radio resource control RRC, and the network device may send the indication information to the terminal device by using the DCI or the RRC.

It can be learned that, after sending uplink transmission on the first band and the second band, the terminal device needs to spend specific duration to switch to the third band and the fourth band, and then perform uplink transmission. In the duration, the terminal device skips uplink transmission, and the network device does not receive uplink transmission. The duration is a target time interval, and the target time interval is a minimum value in first time and second time. The first time is a maximum value in a first switching period and a second switching period, and the second time is a maximum value in a third switching period and a fourth switching period. The first switching period is a switching period of a first band pair, the second switching period is a switching period of a second band pair, the third switching period is a switching period of a third band pair, and the fourth switching period is a switching period of a fourth band pair. The first band pair is the first band and the third band, the second band pair is the second band and the fourth band, the third band pair is the first band and the fourth band, and the fourth band pair is the second band and the third band.

For example, assuming that the first band is a band A, the second band is a band B, the third band is a band C, and the fourth band is a band D, the first band pair may be a band pair AC, and the first switching period may be denoted as $T_{switch\_A-C}$; the second band pair may be a band pair BD, and the second switching period may be denoted as $T_{swiwch\_B-D}$; the third band pair may be a band pair AD, and the third switching period may be denoted as $T_{switch\_A-D}$; and the fourth band pair may be a band pair BC, and the fourth switching period may be denoted as $T_{switch\_B-C}$. In this case, the target time interval may be represented as: $\min\{\max[T_{switch\_A-C}, T_{switch\_B-D}], \max[T_{switch\_A-D}, T_{switch\_B-C}]\}$.

It may be understood that a first timing advance (timing advance, TA) corresponding to the first band, a second TA corresponding to the second band, a third TA corresponding to the third band, and a fourth TA corresponding to the fourth band belong to a same timing advance group (TA group, TAG), that is, TAs of one or more serving cells accessed by the terminal device belong to a same TAG.

The terminal device may switch from the band A and the band B to the band C and the band D to send the uplink transmission in the following two switching manners:

Manner 1: Switch from the band A to the band C, and switch from the band B to the band D.

The first time is a maximum value in $T_{switch\_A-C}$ and $T_{switch\_B-D}$, that is, the first time is $\max[T_{switch\_A-C}, T_{switch\_B-D}]$.

Manner 2: Switch from the band A to the band D, and switch from the band B to the band C.

The second time is a maximum value in $T_{switch\_A-D}$ and $T_{switch\_B-C}$, that is, the second time is $\max[T_{switch\_A-D}, T_{switch\_B-C}]$.

In this case, the target time interval may be $\min\{\max[T_{switch\_A-C}, T_{switch\_B-D}], \max[T_{switch\_A-D}, T_{switch-B-C}]\}$, and the terminal device may skip uplink transmission in $\min\{\max[T_{switch\_A-C}, T_{switch\_B-D}], \max[T_{switch\_A-D}, T_{switch\_B-C}]\}$; or the terminal device may complete uplink switching from the band A and the band B to the band C and the band D in $\min\{\max[T_{switch\_A-C}, T_{switch\_B-D}], \max[T_{switch\_A-D}, T_{switch\_B-C}]\}$; or neither of two radio frequency chains of the terminal device performs uplink transmission in $\min\{\max[T_{switch\_A-C}, T_{switch\_B-D}], \max[T_{switch\_A-D}, T_{switch\_B-C}]\}$; or the terminal device does not expect to perform uplink transmission in a time period or on a time domain resource that partially or completely overlaps $\min\{\max[T_{switch\_A-C}, T_{switch\_B-D}], \max[T_{switch\_A-D}, T_{switch\_B-C}]\}$.

It may be understood that, that the terminal device sends the uplink transmission and the terminal device performs the uplink transmission have a same meaning, and both may be understood as that the terminal device sends uplink signaling, an uplink signal, or an uplink channel to the network device. In addition, a name of the indication information is merely an example, and the indication information may also be referred to as scheduling information, a message #1, or the like. This is not limited.

In conclusion, the terminal device may perform uplink switching from the first band and the second band to the third band and the fourth band in two switching manners: A first radio frequency chain switches from the first band to the third band, and a second radio frequency chain switches from the second band to the fourth band; or the first radio frequency chain switches from the first band to the fourth band, and the second radio frequency chain switches from the second band to the third band. The terminal device may skip uplink transmission in the target time interval, and the network device may not receive uplink transmission in the target time interval. The target time interval is a switching period corresponding to a switching manner that requires a shorter switching period in the two switching manners. In this way, time for skiping uplink transmission can be shortened, a waste of uplink transmission resources can be reduced, and uplink transmission performance can be improved.

With reference to the foregoing embodiment, optionally, before step S601, the method may further include the following step:

S602: The terminal device sends first capability information. The network device receives the first capability information.

The first capability information may indicate a capability of the terminal device to perform uplink transmission, and includes at least one of the following:

the terminal device skips uplink transmission in the target time interval; or

the terminal device completes uplink switching from the first band and the second band to the third band and the fourth band in the target time interval; or

the terminal device does not send uplink transmission in a time period that partially or completely overlaps the target time interval; or

the first radio frequency chain and the second radio frequency chain of the terminal device do not send uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

The capabilities indicated by the first capability information are merely some examples. This is not limited in this embodiment of this application.

If the terminal device sends and reports the first capability information to the network device, it may indicate that the terminal device can support any capability indicated by the first capability information.

For example, continuing with the foregoing embodiment, before the network device sends the indication information to the terminal device, the terminal device may report at least one of the following capabilities to the network device:

the terminal device skips uplink transmission in $\min\{\max[T_{switch\_A-C}, T_{switch\_B-D}], \max[T_{switch\_A-D}, T_{switch\_B-C}]\}$; or

the terminal device completes uplink switching from the band A and the band B to the band C and the band D in $\min\{\max[T_{switch\_A-C}, T_{switch\_B-D}], \max[T_{switch\_A-D}, T_{switch-B-C}]\}$; or

the terminal device does not send uplink transmission in a time period (or on a time domain resource) that partially or completely overlaps $\min\{\max[T_{switch\_A-C}, T_{switch\_B-D}], \max[T_{switch\_A-D}, T_{switch\_B-C}]\}$, that is, the terminal device does not expect to send uplink transmission in a time period (or on a time domain resource) that partially or completely overlaps $\min\{\max[T_{switch\_A-C}, T_{switch\_B-D}], \max[T_{switch\_A-D}, T_{switch\_B-C}]\}$; or

the first radio frequency chain and the second radio frequency chain of the terminal device do not send uplink transmission in $\min\{\max[T_{switch\_A-C}, T_{switch\_B-D}], \max[T_{switch\_A-D}, T_{switch\_B-C}]\}$, that is, neither of the first radio frequency chain and the second radio frequency chain expects to send uplink transmission in $\min\{\max[T_{switch\_A-C}, T_{switch\_B-D}], \max[T_{switch\_A-D}, T_{switch\_B-C}]\}$, where the first radio frequency chain may perform uplink switching between the band A and the band C, and the second radio frequency chain may perform uplink switching between the band B and the band D; or the first radio frequency chain may perform uplink switching between the band A and the band D, and the second radio frequency chain may perform uplink switching between the band B and the band C; or

the terminal device does not expect to perform uplink transmission in a time period (or on a time domain resource) that partially or completely overlaps $\min\{\max[T_{switch\_A-C}, T_{switch\_B-D}], \max[T_{switch\_A-D}, T_{switch\_B-C}]\}$.

It may be understood that, after the terminal device reports, to the network device, that the capability indicated by the first capability information is supported, if the terminal device switches from the first band and the second band to the third band and the fourth band to send the uplink transmission, the radio frequency chains of the terminal device perform switching in a switching manner corresponding to the target time interval.

Optionally, the first capability information may be reported at a granularity of a terminal device. In other words, the capability indicated by the first capability information is a capability per terminal device (per UE). Provided that a specific terminal device (for example, UE #1) reports the first capability information, the UE 1 can support the capability indicated by the first information for any band combination and band pair. In this case, the first band, the second band, the third band, and the fourth band may be any band.

For example, if the UE #1 sends the first capability information to the network device, it indicates that the UE #1 can support the capability for any band combination, such as a band combination ABCD or a band combination XYZW. If UE #2 does not send the first capability information to the network device, it indicates that the UE #2 does not support the capability for any band combination, such as the band combination ABCD or the band combination XYZW.

Alternatively, the first capability information may be reported by using a band combination as a granularity. In other words, the capability indicated by the first capability information is a capability per band combination (per band combination). The band combination may include the first band, the second band, the third band, and the fourth band. In other words, if the terminal device (for example, the UE #1) reports the first capability information for a band combination #1, the UE #1 can support the capability indicated by the first capability information for the band combination #1. If the UE #1 does not report the first capability information for a band combination #2, the UE #1 does not support the capability indicated by the first capability information for the band combination #2.

For example, if the UE #1 reports the capability for the band combination ABCD, the UE #1 can support the capability for the band combination ABCD. When the network device schedules the UE #1 to send uplink transmission on the band A and the band B, and then send uplink transmission on the band C and the band D, the UE #1 skips uplink transmission in the target time interval $\min\{\max[T_{switch\_A-C}, T_{switch\_B-D}], \max[T_{switch\_A-D}, T_{switch\_B-C}]\}$. In other words, for a band combination for which the capability is reported in an associated manner, the UE #1 can select a manner with a shorter switching period to perform uplink switching between the four bands.

If the UE #1 does not report the capability for the band combination XYZW, the UE #1 cannot support the capability for the band combination XYZW. When the network device schedules the UE #1 to send uplink transmission on a band X and a band Y, and then send uplink transmission on a band Z and a band W, the UE #1 cannot skip uplink transmission only in a target time interval $\min\{\max[T_{switch\_X-Z}, T_{switch\_Y-W}], \max[T_{switch\_X-W}, T_{switch\_Y-Z}]\}$. In other words, for a spectrum combination for which the capability is not reported in an associated manner, the UE #1 cannot select a manner with a shorter switching period to perform uplink switching between the four bands.

Alternatively, the first capability information may be reported by using a band pair in a band combination as a granularity. In other words, the capability indicated by the first information is a capability per band combination per band pair (per band combination per band pairs). In other words, for a specific band pair in a specific spectrum combination for which reporting is performed, the terminal device can support the capability indicated by the first capability information; and for a spectrum combination for which the capability is not reported, the terminal device does not support the capability. It may be understood that, if four band pairs related to uplink switching include at least one band pair that does not support the capability in a band combination for which the capability is reported, the current uplink switching does not support the capability. For example, if the UE #1 reports the capability for band pairs AC, BC, AD, and BD in a band combination ABCDE, the UE #1 does not support the capability for band pairs BE, CE, BD, and CD.

It may be understood that a reporting granularity of the first capability information is not limited in this embodiment of this application, and may be determined based on an actual application scenario. This is not limited. In addition, the first capability information may alternatively be named in any other possible manner. This is not specifically limited in this embodiment of this application.

Optionally, before step S601, the method may further include the following step:
S603: The terminal device sends second capability information. The network device receives the second capability information.

The second capability information indicates that the terminal device supports the first band pair, the second band pair, the third band pair, and the fourth band pair. In other words, the terminal device reports, to the network device, a capability that switching from the first band to the third band, switching from the second band to the fourth band, switching from the first band to the fourth band, and switching from the first band to the third band can be supported. For example, continuing with the foregoing embodiment, the terminal device reports, to the network device, that the band pair AC, the band pair BD, the band pair AD, and the band pair BC can be supported.

The second capability information may further indicate the first switching period, the second switching period, the third switching period, and the fourth switching period. For example, continuing with the foregoing embodiment, the terminal device may further report $T_{switch\_A-C}$, $T_{switch\_B-D}$, $T_{switch\_A-D}$, and $T_{switch\_B-C}$ to the network device while reporting that the foregoing band pairs are supported.

It may be understood that the first capability information and the second capability information may be carried in same signaling, or may be carried in different signaling. This is not limited. A sequence of step S602 and step S603 is not limited in this embodiment of this application.

The second capability information may alternatively be named in any other possible manner. This is not limited.

Optionally, the method may further include the following step:
S604: The network device sends configuration information. The terminal device receives the configuration information.

The configuration information indicates that the capability indicated by the first information takes effect.

There may be a plurality of indication manners of the configuration information. For example, the configuration information may be of a Boolean (bool) type. If the network device sends the configuration information, it indicates that the capability indicated by the first capability information takes effect. If the terminal device does not send the configuration information, it indicates that the capability indicated by the first capability information does not take effect. In other words, the terminal device cannot use the capability indicated by the first capability information to perform uplink transmission.

Alternatively, the configuration information may be 1-bit (bit) information. "1" indicates that the capability indicated by the first capability information takes effect, and "0" indicates that the capability indicated by the first information does not take effect. For another example, the first indication information may be of an enumerated type, and different padding values represent effective states of the capability indicated by the first capability information. Certainly, the foregoing indication manner of the configuration information is merely an example. Implementation of a specific indication manner of the configuration information is not limited in this embodiment of this application.

It may be understood that the network device may not send the configuration information to the terminal device, and the network device may consider, by default, that the capability indicated by the first capability information takes effect. This is not limited. In addition, the configuration information may alternatively be named in any other possible manner. This is not specifically limited in this embodiment of this application.

For example, FIG. 7 is a schematic flowchart 2 of a communication method according to an embodiment of this application. The method is applicable to communication between the network device and the terminal in the foregoing communication system. Specifically, as shown in FIG. 7, a procedure of the communication method is as follows.

S701: The network device sends indication information. The terminal device receives the indication information. It may be understood that for a specific description of the indication information, refer to the related description in step S601. Details are not described.

In this step, a first TA corresponding to the first band, a second TA corresponding to the second band, a third TA corresponding to the third band, and a fourth TA corresponding to the fourth band belong to two TAGs, that is, at least one TA in the first TA, the second TA, the third TA, and the fourth TA may belong to a first TAG, and a TA other than the at least one TA in the first TA, the second TA, the third TA, and the fourth TA may belong to a second TAG. In this case, a time interval between TAs corresponding to different TAGs needs to be considered for a target time interval.

For example, the terminal device may send uplink transmission to the network device by using a cell 1 and a cell 2. A TA corresponding to the cell 1 belongs to the first TAG, a TA corresponding to the cell 2 belongs to the second TAG, and the first TAG and the second TAG are different TAGs. In this case, a value of the target time interval may be in the following three forms. Details are described below.

Form 1: The target time interval may be a sum of a preset time interval and a minimum value in first time and second time.

For the first time and the second time, refer to the related descriptions in the foregoing case 1. Details are not described.

The preset time interval may be understood as a time interval between a TA corresponding to the first TAG and a TA corresponding to the second TAG. For example, it is assumed that a TA #1 corresponding to a band 1 belongs to a TAG #1, a TA #2 corresponding to a band 2 belongs to a TAG #2, a time interval (that is, the foregoing preset time interval) between the TA #1 and the TA #2 is T1, and a switching period of a band pair 12 is $T_{switch\_1-2}$. In this case, a time interval required by the terminal device to complete switching from the band 1 to the band 2 is $T_{switch\_1-2}$ + T1. In other words, the time interval between the TA #1 and the TA #2 needs to be added to the switching period of the band pair 12. For example, as shown in FIG. 8, the network device schedules the terminal device to send a PRACH on the band 1, that is, a symbol 1 to a symbol 4, and switch to send a PRACH on the band 2, that is, a symbol 9 to a symbol 12, $T_{switch\_1-2}$ includes four symbols, and the preset time interval is T1. In this case, the time interval required by the terminal device to complete switching from the band 1 to the band 2 is $T_{switch\_1-2}$ + T1.

The preset time interval may include a maximum transmission timing difference (maximum transmission timing difference, MTTD) and/or an error (error). The MTTD is a maximum value of a transmission timing difference that can be processed by the terminal device. Table 2 is a correspondence between a value of the MTTD and a frequency range of a pair of TAGs (that is, the first TAG and the second TAG). As shown in Table 2, if both the first TAG and the second TAG belong to a frequency range (frequency range, FR) 1, MTTD=34.6 $\mu$s; or if both the first TAG and the second TAG belong to FR2-1, MTTD=8.5 $^{Note1}$ $\mu$s; or if the first TAG and the second TAG belong to a frequency range between FR1 and FR2-1, MTTD=26.1 $\mu$s; or if the first TAG and the second TAG belong to a frequency range between FR1 and FR2-2, a value of the MTTD is to be determined (to be determined, TBD).

Table 2

| Frequency range of the first TAG and the second TAG | Value of the MTTD ($\mu$s) |
|---|---|
| FR1 | 34.6 |
| FR2-1 | 8.5 [Note1] |
| Between FR1 and FR2-1 | 26.1 |
| Between FR1 and FR2-2 | TBD |

The error may be a measurement error, an error caused by thermal noise, or another error generated by the terminal device. A value of the error may be 0. This is not limited.

A value of the preset time interval may be at least one of the following: an MTTD, an MTTD + error, a 2MTTD + error, and the like. This is not limited. It may be understood that the preset time interval is less than or equal to a length of one orthogonal frequency-division multiplexing symbol (orthogonal frequency-division multiplexing symbol, OS), that is, lengths of the MTTD, the MTTD + error, and the 2MTTD + error are all less than or equal to a length of one OS.

For example, continuing with the foregoing embodiment, if the terminal device sends uplink transmission to the network device by using the cell 1 before switching, and sends uplink transmission to the network device by using the cell 2 after switching, that is, a band A and a band B correspond to the first TAG, a band C and a band D correspond to the second TAG, and preset time interval=1OS, target time interval #1=min{max[$T_{switch\_A-C}$ + 1OS, $T_{switch\_B-D}$ + 1OS], max[$T_{switch\_A-D}$ + 1OS, $T_{switch\_B-C}$ + 1OS]}=min{max[$T_{switch\_A-C}$, $T_{switch\_B-D}$], max[$T_{switch\_A-D}$, $T_{switch\_B-C}$]} + 1OS, and the terminal device may skip uplink transmission in the target time interval #1.

The target time interval #1 may alternatively be, for example, represented in the following form:

target time interval #1=ceil{(min{max[$T_{switch\_A-C}$, $T_{switch\_B-D}$], max[$T_{switch\_A-D}$, $T_{switch\_B-C}$]})/OS length}+1OS, where OS length represents a length of one OS, and ceil is a rounding function; or target time interval #1=ceil{(min{max[$T_{switch\_A-C}$, $T_{switch\_B-D}$], max[$T_{switch\_A-D}$, $T_{switch\_B-C}$]} + MTTD + error)/OS length} + 1OS;

or target time interval #1=ceil{(min{max[$T_{switch\_A-C}$, $T_{switch\_B-D}$], max[$T_{switch\_A-D}$, $T_{switch\_B-C}$]} + 2*MTTD + error)/OS length} + 1OS.

It may be understood that a length of one OS may be determined by a subcarrier spacing. A value of the subcarrier spacing is not limited in this embodiment of this application.

Form 2: The target time interval may be a minimum value in third time and fourth time.

The third time is a maximum value in the second switching period and a sum of the first switching period and the preset time interval, and the fourth time is a maximum value in the fourth switching period and a sum of the third switching period and the preset time interval.

For example, continuing with the foregoing embodiment, if the terminal device sends uplink transmission to the network device on a band A by using the cell 1, and sends uplink transmission to the network device on a band B, a band C, and a band D by using the cell 2, that is, the band A corresponds to the first TAG, the band B, the band C, and the band D all correspond to the second TAG, and preset time interval=1OS, the third time may be $\max[T_{switch\_A-C} + 1OS, T_{switch\_B-D}]$, the fourth time may be $\max[T_{switch\_A-D} + 1OS, T_{switch\_B-C}]$, target time interval #2=$\min\{\max[T_{switch\_A-C} + 1OS, T_{switch\_B-D}],$ $\max[T_{switch\_A-D} + 1OS, T_{switch\_B-C}]\}$, and the terminal device may skip uplink transmission in the target time interval #2.

The target time interval #2 may alternatively be, for example, represented in the following form:

target time interval #2=$\text{ceil}\{(\min\{\max[T_{switch\_A-C} + 1OS, T_{switch\_B-D}], \max[T_{switch\_A-D} + 1OS, T_{switch\_B-C}]\} + MTTD)/OS \text{ length}\};$

or

target time interval #2=$\text{ceil}\{(\min\{\max[T_{switch\_A-C} + 1OS, T_{switch\_B-D}], \max[T_{switch\_A-D} + 1OS, T_{switch\_B-C}]\} + MTTD + error)/OS \text{ length}\};$

or

target time interval #2=$\text{ceil}\{(\min\{\max[T_{switch\_A-C} + 1OS, T_{switch\_B-D}], \max[T_{switch\_A-D} + 1OS, T_{switch\_B-C}]\} + 2*MTTD + error)/OS \text{ length}\}.$

Form 3: The target time interval may be a minimum value in the first time and fifth time.

The fifth time is a sum of the second time and the preset time interval.

For example, continuing with the foregoing embodiment, if the terminal device sends uplink transmission to the network device on a band A and a band C by using the cell 1, and sends uplink transmission to the network device on a band B and a band D by using the cell 2, that is, the band A and the band C correspond to the first TAG, the band B and the band D correspond to the second TAG, and preset time interval=1OS, the fifth time may be $\max[T_{switch\_A-D} + 1OS, T_{switch\_B-C} + 1OS]$, target time interval #3=$\min\{\max[T_{switch\_A-C}, T_{switch\_B-D}], \max[T_{switch\_A-D} + 1OS, T_{switch\_B-C} + 1OS]\}=\min\{\max[T_{switch\_A-C}, T_{switch\_B-D}], \max[T_{switch\_A-D}, T_{switch\_B-C}]+ 1OS\}$, and the terminal device may skip uplink transmission in the target time interval #3.

The target time interval #3 may alternatively be, for example, represented in the following form:

target time interval #3=$\text{ceil}\{(\min\{\max[T_{switch\_A-C}, T_{switch\_B-D}], \max[T_{switch\_A-D}, T_{switch\_B-C}]+ 1OS\} + MTTD)/OS \text{ length}\};$
or

target time interval #3=$\text{ceil}\{(\min\{\max[T_{switch\_A-C}, T_{switch\_B-D}], \max[T_{switch\_A-D}, T_{switch\_B-C}] + 1OS\} + MTTD + error)/OS \text{ length}\};$ or

target time interval #3=$\text{ceil}\{(\min\{\max[T_{switch\_A-C}, T_{switch\_B-D}], \max[T_{switch\_A-D}, T_{switch\_B-C}]+ 1OS\} + 2*MTTD + error)/OS \text{ length}\}.$

It may be understood that the foregoing three forms of the target time interval are merely examples, and the target time interval may alternatively correspond to another value based on an actual scenario. This is not limited.

It may be understood that, that the terminal device sends the uplink transmission and the terminal device performs the uplink transmission have a same meaning, and both may be understood as that the terminal device sends uplink signaling, an uplink signal, or an uplink channel to the network device. In addition, a name of the indication information is merely an example, and the indication information may also be referred to as scheduling information, a message #1, or the like. This is not limited.

In conclusion, the terminal device may switch from the first band and the second band to the third band and the fourth band to send uplink transmission in two switching manners: switching from the first band to the third band, and switching from the second band to the fourth band; or switching from the first band to the fourth band, and switching from the second band to the third band. The terminal device may skip uplink transmission in the target time interval. The target time interval is a minimum value in switching periods required by the two switching manners. In this way, time for skiping uplink transmission can be shortened, a waste of uplink transmission resources can be reduced, and uplink transmission performance can be improved.

With reference to the foregoing embodiment, optionally, before step S701, the method may further include the following step:

S702: The terminal device sends first capability information. The network device receives the first capability information.

For a specific description of step S702, refer to the related description in step S602. Details are not described.

Optionally, before step S701, the method may further include the following step:

S703: The terminal device sends second capability information. The network device receives the second capability information.

For a specific description of step S703, refer to the related description in step S603. Details are not described.

A sequence of step S702 and step S703 is not limited in this embodiment of this application.

Optionally, the method may further include the following step:

S704: The network device sends configuration information. The terminal device receives the configuration information.

For a specific description of step S704, refer to the related description in step S603. Details are not described. It may be understood that the foregoing description is provided by using an example in which the terminal device switches between the four bands. In this embodiment of this application, a quantity of bands is not limited, and there may be more bands, for example, five bands or six bands. In this case, the terminal device may switch from two bands to three bands, from three bands to two bands, from three bands to three bands, or the like. An implementation principle of the switching is the same as that of switching between the foregoing four bands. For specific implementation, refer to the foregoing implementation process of switching between the four bands by the terminal device. Details are not described.

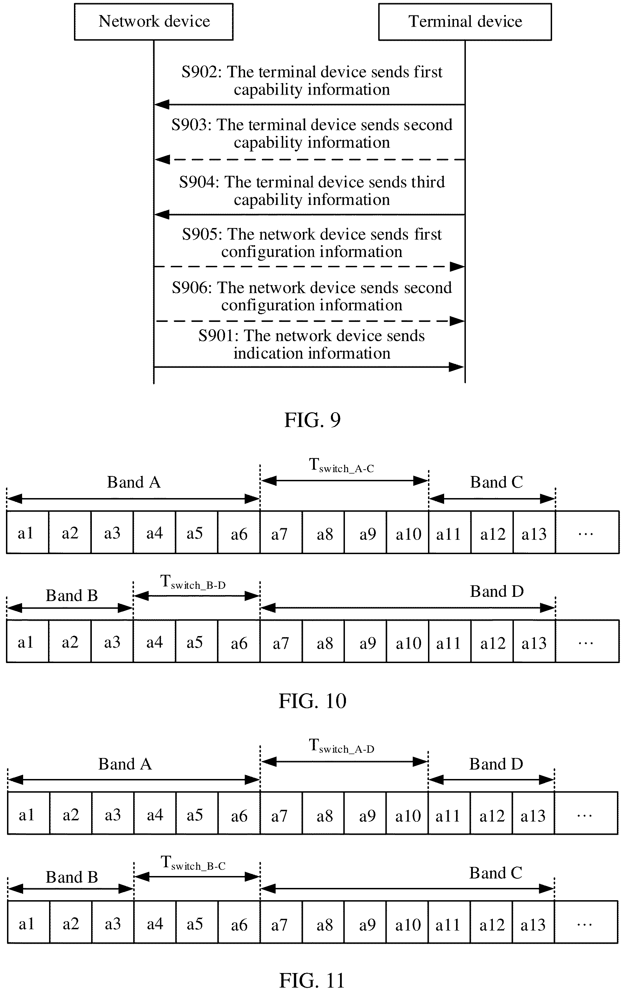

For example, FIG. 9 is a schematic flowchart 3 of a communication method according to an embodiment of this application. The method is applicable to communication between the network device and the terminal in the foregoing communication system. Specifically, as shown in FIG. 9, a procedure of the communication method is as follows.

S901: The network device sends indication information. The terminal device receives the indication information.

The indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission.

It may be understood that for a specific description of the indication information, refer to the related description in step S601. Details are not described.

A first radio frequency chain and a second radio frequency chain of the terminal device perform uplink switching from the first band and the second band to the third band and the fourth band sequentially (sequentially). In other words, uplink switching is performed between two band pairs on one switching occasion (occasion/instance), radio frequency retuning and power ramping/falling of the two radio frequency chains are performed sequentially, and the first radio frequency chain and the second radio frequency chain cannot implement parallel (concurrent/parallel) switching. In this case, an uplink switching period is a sum of time for completing uplink switching by the first radio frequency chain and time for completing uplink switching by the second radio frequency chain. The switching occasion may include the following two cases:

Case a: When one band pair involves uplink switching, a radio frequency chain switching process of the band pair is one switching occasion.
Case b: When two band pairs involve uplink switching, switching periods of the two band pairs may partially or completely overlap, or may be back-to-back/one next to the other one (back-to-back/one next to the other one). The UE does not send uplink transmission in the switching period. This process is one switching occasion.

This step mainly involves performing uplink switching between two band pairs, that is, this embodiment of this application is a case corresponding to the case b. To be specific, after the first radio frequency chain completes uplink switching, the second radio frequency chain starts to perform uplink switching; or after the second radio frequency chain completes uplink switching, the first radio frequency chain starts to perform uplink switching. This is not limited in this embodiment of this application.

For example, continuing with the foregoing embodiment, the first band is a band A, the second band is a band B, the third band is a band C, and the fourth band is a band D. A first band pair may be a band pair AC, and a first switching period may be denoted as $T_{switch\_A-C}$; a second band pair may be a band pair BD, and a second switching period may be denoted as $T_{switch\_B-D}$; a third band pair may be a band pair AD, and a third switching period may be denoted as $T_{switch\_A-D}$; and a fourth band pair may be a band pair BC, and a fourth switching period may be denoted as $T_{switch\_B-C}$. In this case, states of the first radio frequency chain and the second radio frequency chain on the bands {A, B, C, D} change from {1T, 1T, 0T, 0T} to {0T, 0T, 1T, 1T}. For a switching manner in which the terminal device switches from the band A and the band B to the band C and the band D to send uplink transmission, refer to the related descriptions in the manner 1 and the manner 2 in step S601. Details are not described.

The terminal device skips uplink transmission in a target time interval. There may be the following four cases of a value of the target time interval. Details are described below.

Case A: The target time interval is a maximum value in first time and second time.

The first time is a sum of the first switching period and the second switching period, and the second time is a sum of the third switching period and the fourth switching period. For example, as shown in FIG. 10, when the first radio frequency chain of the terminal device switches from the band A (a time domain resource of symbols a1 to a6) to the band C (a time domain resource of symbols a11 to a13), and the second radio frequency chain of the terminal device switches from the band B (a time domain resource of symbols a1 to a3) to D (a time domain resource of symbols a7 to a13), the first time may be represented as $T_{switch\_A-C} + T_{switch\_B-D}$. As shown in FIG. 11, when the first radio frequency chain of the terminal device switches from the band A (a time domain resource of symbols a1 to a6) to D (a time domain resource of symbols a11 to a13), and the second radio frequency chain of the terminal device switches from the band B (a time domain resource of symbols a1 to a3) to C (a time domain resource of symbols a7 to a13), the second time may be represented as $T_{switch\_A-D} + T_{switch\_B-C}$. In this case, the target time interval may be represented as $\max\{[T_{switch\_A-C} + T_{switch\_B-D}], [T_{switch\_A-D} + T_{switch\_B-C}]\}$.

The network device does not schedule specific two bands between which the radio frequency chain switches. Therefore, to avoid ambiguity, when the UE supports sequential switching of the two radio frequency chains, the terminal device may select a longer switching period in switching periods required by the two switching manners as the target time interval. To be specific, the terminal device may skip uplink transmission in $\max\{[T_{switch\_A-C} + T_{switch\_B-D}], [T_{switch\_A-D} + T_{switch\_B-C}]\}$; or the terminal device may complete uplink switching from the band A and the band B to the band C and the band D in $\max\{[T_{switch\_A-C} + T_{switch\_B-D}], [T_{switch\_A-D} + T_{switch\_B-C}]\}$; or neither of the two radio frequency chains of the terminal device performs uplink transmission in $\max\{[T_{switch\_A-C} + T_{switch\_B-D}], [T_{switch\_A-D} + T_{switch\_B-C}]\}$; or the terminal device does not expect to send uplink transmission in a time period or on a time domain resource that partially or completely overlaps $\max\{[T_{switch\_A-C} + T_{switch\_B-D}], [T_{switch\_A-D} + T_{switch\_B-C}]\}$.

In this case, the terminal device may perform uplink switching from the first band and the second band to the third band and the fourth band in two switching manners: The first radio frequency chain switches from the first band to the third band, and the second radio frequency chain switches from the second band to the fourth band; or the first radio frequency chain switches from the first band to the fourth band, and the second radio frequency chain switches from the second band to the third band. The terminal device may skip uplink transmission in the target time interval, and the network device may not receive uplink transmission in the target time interval. To avoid ambiguity, that is, a specific band pair for performing switching by the radio frequency chain, the target time interval is a switching period corresponding to a switching manner that requires a longer switching period in the two switching manners. In this way, the band pair for performing radio frequency chain switching by the radio frequency chain may not be distinguished, thereby saving additional signaling overheads, and improving uplink transmission performance.

Case B: The target time interval may alternatively be a minimum value in first time and second time.

The first time is a sum of the first switching period and the second switching period, and the second time is a sum of the third switching period and the fourth switching period. For example, as shown in FIG. 10, when the first radio frequency chain of the terminal device switches from the band A (a time domain resource of symbols a1 to a6) to the band C (a time domain resource of symbols a11 to a13), and the second radio frequency chain of the terminal device switches from the band B (a time domain resource of symbols a1 to a3) to D (a time domain resource of symbols a7 to a13), the first time may be represented as $T_{switch\_A-C} + T_{switch\_B-D}$. As shown in FIG. 11, when the first radio frequency chain of the terminal device switches from the band A (a time domain resource of symbols a1 to a6) to D (a time domain resource of symbols a11 to a13), and the second radio frequency chain of the terminal device switches from the band B (a time domain resource of symbols a1 to a3) to C (a time domain resource of symbols a7 to a13), the second time may be represented as $T_{switch\_A-D} + T_{switch\_B-C}$. In this case, the target time interval may be represented as $\min\{[T_{switch\_A-C} + T_{switch\_B-D}], [T_{switch\_A-D} + T_{switch\_B-C}]\}$.

The network device does not schedule specific two bands between which the radio frequency chain switches. Therefore, according to a third capability of the terminal device, when the UE supports sequential switching of the two radio frequency chains, as an advanced capability/optional capability, the terminal device may select a shorter switching period in switching periods required by the two switching manners as the target time interval. To be specific, the terminal device may skip uplink transmission in $\min\{[T_{switch\_A-C} + T_{switch\_B-D}], [T_{switch\_A-D} + T_{switch\_B-C}]\}$; or the terminal device may complete uplink switching from the band A and the band B to the band C and the band D in $\min\{[T_{switch\_A-C} + T_{switch\_B-D}], [T_{switch\_A-D} + T_{switch\_B-C}]\}$; or neither of the two radio frequency chains of the terminal device performs uplink transmission in $\min\{[T_{switch\_A-C} + T_{switch\_B-D}], [T_{switch\_A-D} + T_{switch\_B-C}]\}$; or the terminal device does not expect to send uplink transmission in a time period or on a time domain resource that partially or completely overlaps $\min\{[T_{switch\_A-C} + T_{switch\_B-D}], [T_{switch\_A-D} + T_{switch\_B-C}]\}$. For a specific description of the third capability of the terminal device, refer to a related description in step S904. Details are not described herein.

In this case, the terminal device may perform uplink switching from the first band and the second band to the third band and the fourth band in two switching manners: The first radio frequency chain switches from the first band to the third band, and the second radio frequency chain switches from the second band to the fourth band; or the first radio frequency chain switches from the first band to the fourth band, and the second radio frequency chain switches from the second band to the third band. The terminal device may skip uplink transmission in the target time interval, and the network device may not receive uplink transmission in the target time interval. The target time interval is a switching period corresponding to a switching manner that requires a shorter switching period in the two switching manners. In this way, time for skiping uplink transmission can be shortened, a waste of uplink transmission resources can be reduced, and uplink transmission performance can be improved.

Case C: When the second band and the fourth band are a same band, the terminal device sends the first transmission on the first band, sends the second transmission on the second band, sends the third transmission on the third band, and sends the fourth transmission on the second band. In this case, states of the first radio frequency chain and the second radio frequency chain on the bands {A, B, C} change from {1T, 1T, 0T} to {0T, 1T, 1T}. In this case, the target time interval is a maximum value in first time and second time, the first time is the first switching period, and the second time is a sum of the third switching period and the fourth switching period.

The band B and the band C are a same band. The terminal device switches from the band A and the band B to the band C and the band B in two switching manners. Details are described below.

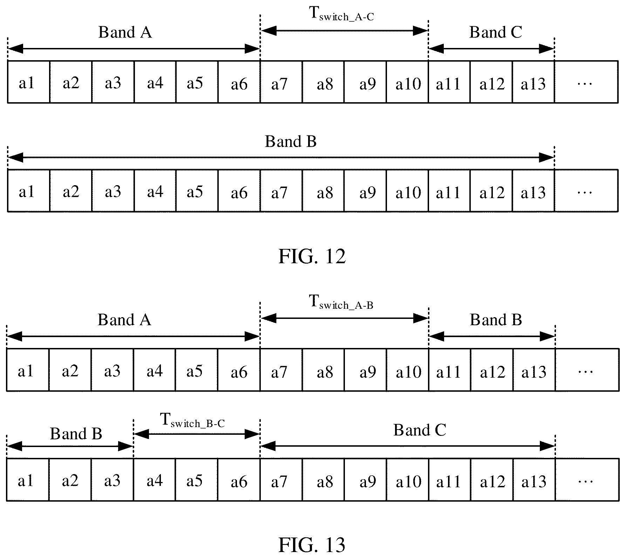

Manner A: As shown in FIG. 12, the first radio frequency chain switches from the band A (a time domain resource of symbols a1 to a6) to the band C (a time domain resource of symbols a11 to a13), and the second radio frequency chain remains unchanged on the band B (a time domain resource of symbols a1 to a13). In this case, the first time, that is, the first switching period is $T_{switch\_A\text{-}C}$.

Manner B: As shown in FIG. 13, the first radio frequency chain switches from the band A (a time domain resource of symbols a1 to a6) to the band B (a time domain resource of symbols a11 to a13), and the second radio frequency chain switches from the band B (a time domain resource of symbols a1 to a3) to the band C (a time domain resource of symbols a7 to a13). In this case, the second time is the sum of the third switching period $T_{switch\_A\text{-}B}$ and the fourth switching period $T_{switch\_B\text{-}C}$, that is, the second time is $T_{switch\_A\text{-}B} + T_{switch\_B\text{-}C}$.

In this case, the target time interval may be $\max\{T_{switch\_A\text{-}C}, [T_{switch\_A\text{-}B} + T_{switch\_B\text{-}C}]\}$.

The network device does not schedule specific two bands between which the radio frequency chain switches. Therefore, to avoid ambiguity, when the UE supports sequential switching of the two radio frequency chains, the terminal device may select a longer switching period in switching periods required by the two switching manners as the target time interval. To be specific, the terminal device may skip uplink transmission in $\max\{T_{switch\_A\text{-}C}, [T_{switch\_A\text{-}B} + T_{switch\_B\text{-}C}]\}$; or the terminal device may complete uplink switching from the band A and the band B to the band C and the band D in $\max\{T_{switch\_A\text{-}C}, [T_{switch\_A\text{-}B} + T_{switch\_B\text{-}C}]\}$; or neither of the two radio frequency chains of the terminal device performs uplink transmission in $\max\{T_{switch\_A\text{-}C}, [T_{switch\_A\text{-}B} + T_{switch\_B\text{-}C}]\}$; or the terminal device does not expect to send uplink transmission in a time period or on a time domain resource that partially or completely overlaps $\max\{T_{switch\_A\text{-}C}, [T_{switch\_A\text{-}B} + T_{switch\_B\text{-}C}]\}$.

In this case, the terminal device may perform uplink switching from the first band and the third band to the third band and the second band in two switching manners: The first radio frequency chain switches from the first band to the third band, and the second radio frequency chain remains unchanged on the second band; or the first radio frequency chain switches from the first band to the second band, and the second radio frequency chain switches from the second band to the third band. The terminal device may skip uplink transmission in the target time interval, and the network device may not receive uplink transmission in the target time interval. To avoid ambiguity, that is, a specific band pair for performing switching by the radio frequency chain, the target time interval is a switching period corresponding to a switching manner that requires a longer switching period in the two switching manners. In this way, the band pair for performing radio frequency chain switching by the radio frequency chain may not be distinguished, thereby saving additional signaling overheads, and improving uplink transmission performance.

Case D: When the second band and the fourth band are a same band, the terminal device sends the first transmission on the first band, sends the second transmission on the second band, sends the third transmission on the third band, and sends the fourth transmission on the second band. In this case, states of the first radio frequency chain and the second radio frequency chain on the bands {A, B, C} change from {1T, 1T, 0T} to {0T, 1T, 1T}. In this case, the target time interval is a minimum value in first time and second time, the first time is the first switching period, and the second time is a sum of the third switching period and the fourth switching period.

The band B and the band C are a same band. The terminal device switches from the band A and the band B to the band C and the band B in two switching manners. The two switching manners are the same as the manner A and the manner B in the foregoing case C. Details are not described. In this case, the first time, that is, the first switching period is $T_{switch\_A\text{-}C}$, and the second time is the sum of the third switching period $T_{switch\_A\text{-}B}$ and the fourth switching period $T_{switch\_B\text{-}C}$, that is, the second time is $T_{switch\_A\text{-}B} + T_{switch\_B\text{-}C}$. In this case, the target time interval may be $\min\{T_{switch\_A\text{-}C}, [T_{switch\_A\text{-}B} + T_{switch\_B\text{-}C}]\}$.

The network device does not schedule specific two bands between which the radio frequency chain switches. Therefore, to avoid ambiguity, according to a third capability of the terminal device, when the UE supports sequential switching of the two radio frequency chains, as an advanced capability/optional capability, the terminal device selects a shorter switching period in switching periods required by the two switching manners as the target time interval. To be specific, the terminal device may skip uplink transmission in $\min\{T_{switch\_A-C}, [T_{switch\_A-B} + T_{switch\_B-C}]\}$; or the terminal device may complete uplink switching from the band A and the band B to the band C and the band D in $\min\{T_{switch\_A-C}, [T_{switch\_A-B} + T_{switch\_B-C}]\}$; or neither of the two radio frequency chains of the terminal device performs uplink transmission in $\min\{T_{switch\_A-C}, [T_{switch\_A-B} + T_{switch\_B-C}]\}$; or the terminal device does not expect to send uplink transmission in a time period or on a time domain resource that partially or completely overlaps $\min\{T_{switch\_A-C}, [T_{switch\_A-B} + T_{switch\_B-C}]\}$. For a specific description of the third capability of the terminal device, refer to a related description in step S904. Details are not described herein.

In this case, the terminal device may perform uplink switching from the first band and the third band to the third band and the second band in two switching manners: The first radio frequency chain switches from the first band to the third band, and the second radio frequency chain remains unchanged on the second band; or the first radio frequency chain switches from the first band to the second band, and the second radio frequency chain switches from the second band to the third band. The terminal device may skip uplink transmission in the target time interval, and the network device may not receive uplink transmission in the target time interval. The target time interval is a switching period corresponding to a switching manner that requires a shorter switching period in the two switching manners. In this way, time for skiping uplink transmission can be shortened, a waste of uplink transmission resources can be reduced, and uplink transmission performance can be improved.

With reference to the foregoing embodiment, optionally, before step S901, the method may further include the following step:

S902: The terminal device sends first capability information. The network device receives the first capability information.

The first capability information may indicate a capability of the terminal device to perform uplink transmission, for example, a first capability, and may include at least one of the following:

when the first radio frequency chain completes uplink switching, the second radio frequency chain starts to perform uplink switching; or
the first radio frequency chain and the second radio frequency chain perform uplink switching sequentially; or
when uplink switching is performed between two band pairs, the target time interval is a sum of switching periods corresponding to the two band pairs; or
the terminal device cannot implement parallel switching or simultaneous switching of the first radio frequency chain and the second radio frequency chain.

When uplink switching is performed between the two band pairs, the target time interval is the sum of the switching periods corresponding to the two band pairs, which may also be understood as a sum of time for completing uplink switching by the first radio frequency chain and time for completing uplink switching by the second radio frequency chain.

For example, continuing with the foregoing embodiment, the first indication information is specifically described by using the cases A to D in step S901.

(a1) When the value of the target time interval is the value in the case A, at least one of the following is used as a basic capability that does not need to be reported:

the terminal device skips uplink transmission in $\max\{[T_{switch\_A-C} + T_{switch\_B-D}], [T_{switch\_A-D} + T_{switch\_B-C}]\}$; or
the terminal device completes uplink switching from the band A and the band B to the band C and the band D in $\max\{[T_{switch\_A-C} + T_{switch\_B-D}], [T_{switch\_A-D} + T_{switch\_B-C}]\}$; or
the terminal device does not send uplink transmission in a time period (or on a time domain resource) that partially or completely overlaps $\max\{[T_{switch\_A-C} + T_{switch\_B-D}], [T_{switch\_A-D} + T_{switch\_B-C}]\}$, that is, the terminal device does not expect to send uplink transmission in a time period (or on a time domain resource) that partially or completely overlaps $\max\{[T_{switch\_A-C} + T_{switch\_B-D}], [T_{switch\_A-D} + T_{switch\_B-C}]\}$; or
the first radio frequency chain and the second radio frequency chain of the terminal device do not send uplink transmission in $\max\{[T_{switch\_A-C} + T_{switch\_B-D}], [T_{switch\_A-D} + T_{switch\_B-C}]\}$, that is, neither of the first radio frequency chain and the second radio frequency chain expects to send uplink transmission in $\max\{[T_{switch\_A-C} + T_{switch\_B-D}], [T_{switch\_A-D} + T_{switch\_B-C}]\}$, where the first radio frequency chain may perform uplink switching between the band A and the band C, and the second radio frequency chain may perform uplink switching between the band B and the band D; or the first radio frequency chain may perform uplink switching between the band A and the band D, and the second radio frequency chain may perform uplink switching between the band B and the band C; or

the terminal device does not expect to perform uplink transmission in a time period (or on a time domain resource) that partially or completely overlaps $\max\{[T_{switch\_A\text{-}C} + T_{switch\_B\text{-}D}], [T_{switch\_A\text{-}D} + T_{switch\_B\text{-}C}]\}$.

(a2) When the value of the target time interval is the value in the case B, the terminal device may report the third capability to the network device, which may include at least one of the following capabilities:

the terminal device skips uplink transmission in $\min t\{[T_{switch\_A\text{-}C} + T_{switch\_B\text{-}D}], [T_{switch\_A\text{-}D} + T_{switch\_B\text{-}C}]\}$; or

the terminal device completes uplink switching from the band A and the band B to the band C and the band D in $\min\{[T_{switch\_A\text{-}C} + T_{switch\_B\text{-}D}], [T_{switch\_A\text{-}D} + T_{switch\_B\text{-}C}]\}$; or

the terminal device does not send uplink transmission in a time period (or on a time domain resource) that partially or completely overlaps $\min\{[T_{switch\_A\text{-}C} + T_{switch\_B\text{-}D}], [T_{switch\_A\text{-}D} + T_{switch\_B\text{-}C}]\}$, that is, the terminal device does not expect to send uplink transmission in a time period (or on a time domain resource) that partially or completely overlaps $\min\{[T_{switch\_A\text{-}C} + T_{switch\_B\text{-}D}], [T_{switch\_A\text{-}D} + T_{switch\_B\text{-}C}]\}$; or

the first radio frequency chain and the second radio frequency chain of the terminal device do not send uplink transmission in $\min\{[T_{switch\_A\text{-}C} + T_{switch\_B\text{-}D}], [T_{switch\_A\text{-}D} + T_{switch\_B\text{-}C}]\}$, that is, neither of the first radio frequency chain and the second radio frequency chain expects to send uplink transmission in $\max\{[T_{switch\_A\text{-}C} + T_{switch\_B\text{-}D}], [T_{switch\_A\text{-}D} + T_{switch\_B\text{-}C}]\}$, where the first radio frequency chain may perform uplink switching between the band A and the band C, and the second radio frequency chain may perform uplink switching between the band B and the band D; or the first radio frequency chain may perform uplink switching between the band A and the band D, and the second radio frequency chain may perform uplink switching between the band B and the band C; or

the terminal device does not expect to perform uplink transmission in a time period (or on a time domain resource) that partially or completely overlaps $\min\{[T_{switch\_A\text{-}C} + T_{switch\_B\text{-}D}], [T_{switch\_A\text{-}D} + T_{switch\_B\text{-}C}]\}$; or

when the first radio frequency chain completes uplink switching, the second radio frequency chain starts to perform uplink switching; or

the first radio frequency chain and the second radio frequency chain perform uplink switching sequentially; or

when uplink switching is performed between two band pairs, the target time interval is a sum of switching periods corresponding to the two band pairs; or

the terminal device cannot implement parallel switching or simultaneous switching of the first radio frequency chain and the second radio frequency chain.

It may be understood that for content indicated by the third capability, refer to a related description of the third capability information in step S904. Details are not described.

(a3) When the value of the target time interval is the value in the case C, at least one of the following is used as a basic capability that does not need to be reported:

the terminal device skips uplink transmission in $\max\{T_{switch\_A\text{-}C}, [T_{switch\_A\text{-}B} + T_{switch\_B\text{-}C}]\}$; or

the terminal device completes uplink switching from the band A and the band B to the band C and the band B in $\max\{T_{switch\_A\text{-}C}, [T_{switch\_A\text{-}B} + T_{switch\_B\text{-}C}]\}$; or

the terminal device does not send uplink transmission in a time period (or on a time domain resource) that partially or completely overlaps $\max\{T_{switch\_A\text{-}C}, [T_{switch\_A\text{-}B} + T_{switch\_B\text{-}C}]\}$, that is, the terminal device does not expect to send uplink transmission in a time period (or on a time domain resource) that partially or completely overlaps $\max\{T_{switch\_A\text{-}C}, [T_{switch\_A\text{-}B} + T_{switch\_B\text{-}C}]\}$; or

the first radio frequency chain and the second radio frequency chain of the terminal device do not send uplink transmission in $\max\{T_{switch\_A\text{-}C}, [T_{switch\_A\text{-}B} + T_{switch\_B\text{-}C}]\}$, that is, neither of the first radio frequency chain and the second radio frequency chain expects to send uplink transmission in $\max\{T_{switch\_A\text{-}C}, [T_{switch\text{-}A\text{-}B} + T_{switch\_B\text{-}C}]\}$, where the first radio frequency chain may perform uplink switching between the band A and the band C, and the second radio frequency chain may perform uplink switching between the band C and the band B; or the first radio frequency chain may perform uplink switching between the band A and the band B, and the second radio frequency chain may perform uplink switching between the band B and the band C; or

the terminal device does not expect to perform uplink transmission in a time period (or on a time domain resource) that partially or completely overlaps $\max\{T_{switch\_A\text{-}C}, [T_{switch\_A\text{-}B} + T_{switch\_B\text{-}C}]\}$.

(a4) When the value of the target time interval is the value in the case D, the terminal device may report the third capability to the network device, which may include at least one of the following capabilities:

the terminal device skips uplink transmission in $\min\{T_{switch\_A\text{-}C}, [T_{switch\_A\text{-}B} + T_{switch\_B\text{-}C}]\}$; or

the terminal device completes uplink switching from the band A and the band B to the band C and the band B in min $\{T_{switch\_A-C}, [T_{switch\_A-B} + T_{switch\_B-C}]\}$; or

the terminal device does not send uplink transmission in a time period (or on a time domain resource) that partially or completely overlaps min$\{T_{switch\_A-C}, [T_{switch\_A-B} + T_{switch\_B-C}]\}$, that is, the terminal device does not expect to send uplink transmission in a time period (or on a time domain resource) that partially or completely overlaps min $\{T_{switch\_A-C}, [T_{switch\_A-B} + T_{switch\_B-C}]\}$; or

the first radio frequency chain and the second radio frequency chain of the terminal device do not send uplink transmission in min$\{T_{switch\_A-C}, [T_{switch\_A-B} + T_{switch\_B-C}]\}$, that is, neither of the first radio frequency chain and the second radio frequency chain expects to send uplink transmission in min$\{T_{switch\_A-C}, [T_{switch\_A-B} + T_{switch\_B-C}]\}$, where the first radio frequency chain may perform uplink switching between the band A and the band C, and the second radio frequency chain may perform uplink switching between the band C and the band B; or the first radio frequency chain may perform uplink switching between the band A and the band B, and the second radio frequency chain may perform uplink switching between the band B and the band C; or

the terminal device does not expect to perform uplink transmission in a time period (or on a time domain resource) that partially or completely overlaps min$\{T_{switch\_A-C}, [T_{switch\_A-B} + T_{switch\_B-C}]\}$.

It may be understood that for content indicated by the third capability, refer to a related description of the third capability information in step S904. Details are not described. The first capability information may alternatively be named in any other possible manner. This is not limited.

Optionally, before step S901, the method may further include the following step:

S903: The terminal device sends second capability information. The network device receives the second capability information.

The second capability information indicates the following: The terminal device supports the first band pair, the second band pair, the third band pair, and the fourth band pair; or the first switching period, the second switching period, the third switching period, and the fourth switching period.

It may be understood that for a specific description of the second indication information, refer to the related description in step S602. Details are not described. The second capability information may alternatively be named in any other possible manner. This is not limited.

Optionally, before step S901, the method may further include the following step:

S904: The terminal device sends third capability information. The network device receives the third capability information.

When the value of the target time interval is the value in the case B or the case D, the terminal device further needs to report the third capability information to the network device. The third capability information indicates that the target time interval is the minimum value in the first time and the second time. Details are described below.

(b1) When the value of the target time interval is the value in the case B, the third capability information may indicate that uplink switching is performed between the two band pairs on one switching occasion, and a switching period is a minimum value in sums of switching periods corresponding to the two band pairs. In other words, the target time interval may be min$\{[T_{switch\_A-C} + T_{switch\_B-D}], [T_{switch\_A-D} + T_{switch\_B-C}]\}$.

It may be understood that the capability indicated by the third capability information is an advanced capability or an advanced capability, and the terminal device may select a switching manner corresponding to a shorter switching period to perform switching based on information received from the network device, for example, uplink scheduling signaling (UL grant), and a switch-from band and a switch-to band.

For example, when the terminal device switches from the band A and the band B to the band C and the band D, $T_{switch\_A-C}$=35 μs, $T_{switch\_B-D}$=35 μs, $T_{switch\_A-D}$=140 μs, and $T_{switch\_B-C}$=210 μs. If the terminal device performs band switching in the manner 1, that is, switches from the band A to the band C, and switches from the band B to the band D, switching period T1=$T_{switch\_A-C} + T_{switch\_B-D}$=35 + 35=70 μs. If the terminal device performs band switching in the manner 2, that is, switches from the band A to the band D, and switches from the band B to the band C, switching period T2=$T_{switch\_A-D} + T_{switch\_B-C}$=140 + 210=350 μs. In this case, the terminal device selects T1 with a shorter switching period as the target time interval, and performs radio frequency chain switching in a switching manner corresponding to the manner 1. In other words, the first radio frequency chain switches from the band A to the band C, and the second radio frequency chain switches from the band B to the band D.

(b2) When the value of the target time interval is the value in the case D, the third capability information may indicate that uplink switching is performed between the two band pairs on one switching occasion, and a switching period is a minimum value in sums of switching periods corresponding to the two band pairs. In other words, the target time interval may be min$\{T_{switch)A-C}, [T_{switch\_A-B} + T_{switch\_B-C}]\}$.

For example, when the terminal device switches from the band A and the band B to the band C and the band B, $T_{switch\_A-C}$=35 μs, $T_{switch\_A-B}$=140 μs, and $T_{switch\_B-C}$=210 μs. If the terminal device performs band switching in the manner A, that is, switches from the band A to the band C, switching period Ta=$T_{switch\_A-C}$=35 μs. If the terminal device performs band switching in the manner B, that is, switches from the band A to the band B, and switches from the band B to the band C, switching period Tb=$T_{switch\_A-B}$ + $T_{switch\_B-C}$=140 + 210=350 μs. In this case, the terminal device selects Ta with a shorter switching period as the target time interval, and performs radio frequency chain switching in a switching manner corresponding to the manner A. In other words, the first radio frequency chain switches from the band A to the band C, and the second radio frequency chain remains unchanged on the band B.

It may be understood that the third capability information may alternatively be named in any other possible manner. This is not limited.

Optionally, before step S901, the method may further include the following step:

S905: The network device sends first configuration information. The terminal device receives the first configuration information.

For example, continuing with the foregoing embodiment, the first configuration information is specifically described by using the cases A and C in step S901.

(c1) When the value of the target time interval is the value in the case A, the first configuration information may indicate that the capability indicated by the first capability information takes effect. For a specific description, refer to the related description in step S604. Details are not described.

(c2) When the value of the target time interval is the value in the case C, the first configuration information may indicate that the capability indicated by the first capability information takes effect. For a specific description, refer to the related description in step S604. Details are not described.

Optionally, before step S901, the method may further include the following step:

S906: The network device sends second configuration information. The terminal device receives the second configuration information.

For example, continuing with the foregoing embodiment, the second configuration information is specifically described by using the cases B and D in step S901.

(d1) When the value of the target time interval is the value in the case B, the second configuration information may indicate that the capability indicated by the third capability information takes effect.

There may be a plurality of indication manners of the second configuration information. If the network device sends the second configuration information, it indicates that the capability indicated by the third capability information takes effect. In other words, uplink switching is performed between the two band pairs on one switching occasion, and a capability that a switching period is a minimum value in sums of switching periods corresponding to the two band pairs takes effect. In this case, the target time interval is min{[$T_{switch\_A-C}$ + $T_{switch\_B-D}$], [$T_{switch\_A-D}$ + $T_{switch\_B-C}$]}. If the terminal device does not send the second configuration information, it indicates that the capability indicated by the third capability information does not take effect. In other words, the terminal device does not use the capability indicated by the third capability information to perform uplink transmission. In this case, the target switching period is max{[$T_{switch\_A-C}$ + $T_{switch\_B-D}$], [$T_{switch\_A-D}$ + $T_{switch\_B-C}$]}.

Alternatively, the second configuration information may be 1-bit (bit) information. "1" indicates that the capability indicated by the third capability information takes effect, and "0" indicates that the capability indicated by the third information does not take effect. For another example, the third indication information may be of an enumerated type, and different padding values represent effective states of the capability indicated by the third capability information. Certainly, the foregoing indication manner of the second configuration information is merely an example. Implementation of a specific indication manner of the second configuration information is not limited in this embodiment of this application.

(d2) When the value of the target time interval is the value in the case D, the second configuration information may indicate that the capability indicated by the third capability information takes effect.

There may be a plurality of indication manners of the second configuration information. If the network device sends the second configuration information, it indicates that the capability indicated by the third capability information takes effect. In other words, uplink switching is performed between the two band pairs on one switching occasion, and a capability that a switching period is a minimum value in sums of switching periods corresponding to the two band pairs takes effect. In this case, the target time interval is min{$T_{switch\_A-C}$, [$T_{switch\_A-B}$ + $T_{switch\_B-C}$]}. If the terminal device does not send the second configuration information, it indicates that the capability indicated by the third capability information does not take effect. In other words, the terminal device does not use the capability indicated by the third capability information to perform uplink transmission. In this case, the target switching period is max{$T_{switch\_A-C}$, [$T_{switch\_A-B}$ + $T_{switch\_B-C}$]}.

Alternatively, the second configuration information may be 1-bit information. "1" indicates that the capability indicated by the third capability information takes effect, and "0" indicates that the capability indicated by the third information does not take effect. For another example, the third indication information may be of an enumerated type, and different padding values represent effective states of the capability indicated by the third capability information. Certainly, the foregoing indication manner of the second configuration information is merely an example. Implementation of a specific indication manner of the second configuration information is not limited in this embodiment of this application.

It may be understood that a first TA corresponding to the first band, a second TA corresponding to the second band, a third TA corresponding to the third band, and a fourth TA corresponding to the fourth band belong to a same timing advance group, that is, TAs of one or more serving cells accessed by the terminal device belong to a same TAG.

It may be understood that the first TA, the second TA, the third TA, and the fourth TA may alternatively belong to different TAGs. For example, the first TA, the second TA, the third TA, and the fourth TA belong to two TAGs. For example, at least one TA in the first TA, the second TA, the third TA, and the fourth TA may belong to a first TAG, and a TA other than the at least one TA in the first TA, the second TA, the third TA, and the fourth TA may belong to a second TAG. In this case, a time interval between TAs corresponding to different TAGs needs to be considered for the target time interval. The following uses the following cases as examples for specific descriptions.

Case E:

(1) Continuing with the foregoing embodiment, if the terminal device sends uplink transmission to the network device by using a cell 1 before switching, and sends uplink transmission to the network device by using a cell 2 after switching, that is, the band A and the band B correspond to the first TAG, the band C and the band D correspond to the second TAG, and preset time interval=1OS, target time interval #1a=max{[[$T_{switch\_A-C}$ + 1OS + $T_{switch\_B-D+}$ + 1OS], [$T_{switch\_A-D}$ + 1OS + $T_{switch\_B-C}$ + 1OS]}=max{[$T_{switch\_A-C}$ + $T_{switch\_B-D}$], [$T_{switch\_A-D}$ + $T_{switch\_B-C}$ + ]} + 2OS, and the terminal device may skip uplink transmission in the target time interval #1a.

It may be understood that for another representation manner of the target time interval #1a, refer to the foregoing related description of the target time interval #1. Details are not described.

(2) Continuing with the foregoing embodiment, if the terminal device sends uplink transmission to the network device on the band A by using a cell 1, and sends uplink transmission to the network device on the band B, the band C, and the band D by using a cell 2, that is, the band A corresponds to the first TAG, the band B, the band C, and the band D all correspond to the second TAG, and preset time interval=1OS, target time interval #2a=max{[$T_{switch\_A-C}$ + 1OS + $T_{switch\_B-D}$], [$T_{switch\_A-D}$ + 1OS + $T_{switch\_B-C}$]}=max{[$T_{switch\_A-C}$ + $T_{switch\_B-D}$], [$T_{switch\_A-D}$ + $T_{switch\_B-C}$ + ]} + 1OS, and the terminal device may skip uplink transmission in the target time interval #2a.

It may be understood that for another representation manner of the target time interval #2a, refer to the foregoing related description of the target time interval #1. Details are not described.

(3) Continuing with the foregoing embodiment, if the terminal device sends uplink transmission to the network device on the band A and the band C by using a cell 1, and sends uplink transmission to the network device on the band B and the band D by using a cell 2, that is, the band A and the band C correspond to the first TAG, the band B and the band D correspond to the second TAG, and preset time interval=1OS, target time interval #3a=max{[$T_{switch\_A-C}$ + $T_{switch\_B-D}$], [$T_{switch\_A-D}$ + 1OS + $T_{switch\_B-C}$ + 1OS]}=max{[$T_{switch\_A-C}$ + $T_{switch\_B-D}$], [$T_{switch\_A-D}$ + $T_{switch\_B-C}$] + 2OS}, and the terminal device may skip uplink transmission in the target time interval #3a.

It may be understood that for another representation manner of the target time interval #3a, refer to the foregoing related description of the target time interval #1. Details are not described.

Case F:

(1) Continuing with the foregoing embodiment, if the terminal device sends uplink transmission to the network device by using a cell 1 before switching, and sends uplink transmission to the network device by using a cell 2 after switching, that is, the band A and the band B correspond to the first TAG, the band C and the band D correspond to the second TAG, and preset time interval=1OS, target time interval #1b=min{[$T_{switch\_A-C}$ + 1OS + $T_{switch\_B-D}$ + 1OS], [$T_{switch\_A-D}$ + 1OS + $T_{switch\_B-C}$ + 1OS]}=min{[$T_{switch\_A-C}$ + $T_{switch\_B-D}$], [$T_{switch\_A-D}$ + $T_{switch\_B-C}$ + ]} + 2OS, and the terminal device may skip uplink transmission in the target time interval #1b.

It may be understood that for another representation manner of the target time interval #1b, refer to the foregoing related description of the target time interval #1. Details are not described.

(2) Continuing with the foregoing embodiment, if the terminal device sends uplink transmission to the network device on the band A by using a cell 1, and sends uplink transmission to the network device on the band B, the band C, and the band D by using a cell 2, that is, the band A corresponds to the first TAG, the band B, the band C, and the band D all correspond to the second TAG, and preset time interval=1OS, target time interval #2b=min{[$T_{switch\_A-C}$ + 1OS + $T_{switch\_B-D}$], [$T_{switch\_A-D}$ + 1OS + $T_{switch\_B-C}$]}=min{[$T_{switch\_A-C}$ + $T_{switch\_B-D}$], [$T_{switch\_A-D}$ + $T_{switch\_B-C}$ + ]} + 1OS, and the terminal device may skip uplink transmission in the target time interval #2b.

It may be understood that for another representation manner of the target time interval #2b, refer to the foregoing related description of the target time interval #1. Details are not described.

(3) Continuing with the foregoing embodiment, if the terminal device sends uplink transmission to the network device on the band A and the band C by using a cell 1, and sends uplink transmission to the network device on the band B and the band D by using a cell 2, that is, the band A and the band C correspond to the first TAG, the band B and the band D correspond to the second TAG, and preset time interval=1OS, target time interval #3b=min{[$T_{switch\_A-C}$ + $T_{switch\_B-D}$], [$T_{switch\_A-D}$ + 1OS + $T_{switch\_B-C}$ + 1OS]}=min{[$T_{switch\_A-C}$ + $T_{switch\_B-D}$], [$T_{switch\_A-D}$ + $T_{switch\_B-C}$] + 2OS}, and the terminal device may skip uplink transmission in the target time interval #3b.

It may be understood that for another representation manner of the target time interval #3b, refer to the foregoing related description of the target time interval #1. Details are not described.

Case G:

(1) Continuing with the foregoing embodiment, if the terminal device sends uplink transmission to the network device by using a cell 1 before switching, and sends uplink transmission to the network device by using a cell 2 after switching, that is, the band A and the band B correspond to the first TAG, the band C corresponds to the second TAG, and preset time interval=1OS, target time interval #1c=$\max\{T_{switch\_A-C} + 1OS, [T_{switch\_A-B} + T_{switch\_B-C} + 1OS]\}$=$\max\{T_{switch\_A-C}, [T_{switch\_A-B} + T_{switch\_B-C}]\}$ + 1OS, and the terminal device may skip uplink transmission in the target time interval #1c. It may be understood that for another representation manner of the target time interval #1c, refer to the foregoing related description of the target time interval #1. Details are not described.

(2) Continuing with the foregoing embodiment, if the terminal device sends uplink transmission to the network device on the band A by using a cell 1, and sends uplink transmission to the network device on the band B and the band C by using a cell 2, that is, the band A corresponds to the first TAG, the band B and the band C correspond to the second TAG, and preset time interval=1OS, target time interval #2c=$\max\{T_{switch\_A-C} + 1OS, [T_{switch\_A-B} + 1OS + T_{switch\_B-C}]\}$ =$\max\{T_{switch\_A-C}, [T_{switch\_A-B} + T_{switch\_B-C}]\}$ + 1OS, and the terminal device may skip uplink transmission in the target time interval #2c.

It may be understood that for another representation manner of the target time interval #2c, refer to the foregoing related description of the target time interval #1. Details are not described.

(3) Continuing with the foregoing embodiment, if the terminal device sends uplink transmission to the network device on the band A and the band C by using a cell 1, and sends uplink transmission to the network device on the band B by using a cell 2, that is, the band A and the band C correspond to the first TAG, the band B corresponds to the second TAG, and preset time interval=1OS, target time interval #3c=$\max\{T_{switch\_A-C}, [T_{switch\_A-B} + 1OS + T_{switch\_B-C} + 1OS]\}$ =$\max\{T_{switch\_A-C}, [T_{switch\_A-B} + T_{switch\_B-C}] + 2OS\}$, and the terminal device may skip uplink transmission in the target time interval #3c.

It may be understood that for another representation manner of the target time interval #3c, refer to the foregoing related description of the target time interval #1. Details are not described.

Case H:

(1) Continuing with the foregoing embodiment, if the terminal device sends uplink transmission to the network device by using a cell 1 before switching, and sends uplink transmission to the network device by using a cell 2 after switching, that is, the band A and the band B correspond to the first TAG, the band C corresponds to the second TAG, and preset time interval=1OS, target time interval #1d=$\min\{T_{switch\_A-C} + 1OS, [T_{switch\_A-B} + T_{switch\_B-C} + 1OS]\}$=$\min\{T_{switch\_A-C}, [T_{switch\_A-B} + T_{switch\_B-C}]\}$ + 1OS, and the terminal device may skip uplink transmission in the target time interval #1d. It may be understood that for another representation manner of the target time interval #1c, refer to the foregoing related description of the target time interval #1. Details are not described.

(2) Continuing with the foregoing embodiment, if the terminal device sends uplink transmission to the network device on the band A by using a cell 1, and sends uplink transmission to the network device on the band B and the band C by using a cell 2, that is, the band A corresponds to the first TAG, the band B and the band C correspond to the second TAG, and preset time interval=1OS, target time interval #2d=$\min\{T_{switch\_A-C} + 1OS, [T_{switch\_A-B} + 1OS + T_{switch\_B-C}]\}$ =$\min\{T_{switch\_A-C}, [T_{switch\_A-B} + T_{switch\_B-C}]\}$ + 1OS, and the terminal device may skip uplink transmission in the target time interval #2d.

It may be understood that for another representation manner of the target time interval #2d, refer to the foregoing related description of the target time interval #1. Details are not described.

(3) Continuing with the foregoing embodiment, if the terminal device sends uplink transmission to the network device on the band A and the band C by using a cell 1, and sends uplink transmission to the network device on the band B by using a cell 2, that is, the band A and the band C correspond to the first TAG, the band B corresponds to the second TAG, and preset time interval=1OS, target time interval #3d=$\min\{T_{switch\_A-C}, [T_{switch\_A-B} + 1OS + T_{switch\_B-C} + 1OS]\}$ =$\min\{T_{switch\_A-C}, [T_{switch\_A-B} + T_{switch\_B-C}] + 2OS\}$, and the terminal device may skip uplink transmission in the target time interval #3d.

It may be understood that for another representation manner of the target time interval #3d, refer to the foregoing related description of the target time interval #1. Details are not described.

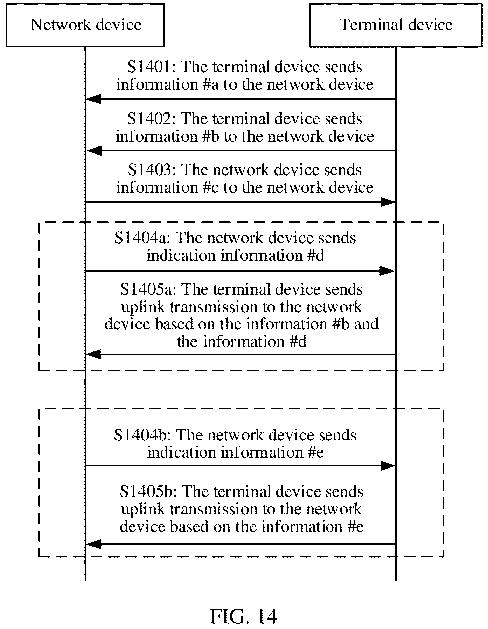

With reference to the method embodiments, the foregoing describes the overall procedure of the communication method provided in embodiments of this application. For ease of understanding, as shown in FIG. 14, the following describes the foregoing method by using a specific scenario.

S1401: A terminal device sends information #a (the foregoing second capability information) to a network device.

The terminal device may report a supported band pair AC, band pair BD, band pair AD, and band pair BC, and $T_{switch\_A-C}$, $T_{switch\_B-D}$, $T_{switch\_A-D}$, and $T_{switch\_B-C}$ to the network device.

For specific implementation of this step, refer to the related description in step S602. Details are not described.

S1402: The terminal device sends information #b (the foregoing first capability information) to the network device.

The terminal device may report, to the network device, that the terminal device may skip uplink transmission in $\min\{\max[T_{switch\_A-C}, T_{switch\_B-D}], \max[T_{switch\_A-D}, T_{switch\_B-C}]\}$ when switching from a band A and a band B to a band C and a band D to send uplink transmission is supported; or the terminal device may complete uplink switching from the band A and the band B to the band C and the band D in $\min\{\max[T_{switch\_A-C}, T_{switch\_B-D}], \max[T_{switch\_A-D}, T_{switch\_B-C}]\}$; or neither of two radio frequency chains of the terminal device performs uplink transmission in $\min\{\max[T_{switch\_A-C}, T_{switch\_B-D}], \max[T_{switch\_A-D}, T_{switch\_B-C}]\}$; or the terminal device does not expect to send uplink transmission in a time period or on a time domain resource that partially or completely overlaps $\min\{\max[T_{switch\_A-C}, T_{switch\_B-D}], \max[T_{switch\_A-D}, T_{switch\_B-C}]\}$.

For specific implementation of this step, refer to the related description in step S603. Details are not described.

S1403: The network device sends information #c (the foregoing configuration information) to the terminal device.

The information #c indicates that the capability that the terminal device skips uplink transmission in $\min\{\max[T_{switch\_A-C}, T_{switch\_B-D}], \max[T_{switch\_A-D}, T_{switch\_B-C}]\}$ takes effect; or the capability that the terminal device completes uplink switching from the band A and the band B to the band C and the band D in $\min\{\max[T_{switch\_A-C}, T_{switch\_B-D}], \max[T_{switch\_A-D}, T_{switch\_B-C}]\}$ takes effect; or the capability that neither of two radio frequency chains of the terminal device performs uplink transmission in $\min\{\max[T_{switch\_A-C}, T_{switch\_B-D}], \max[T_{switch\_A-D}, T_{switch\_B-C}]\}$ takes effect; or the capability that the terminal device does not expect to send uplink transmission in a time period or on a time domain resource that partially or completely overlaps $\min\{\max[T_{switch\_A-C}, T_{switch\_B-D}], \max[T_{switch\_A-D}, T_{switch\_B-C}]\}$ takes effect.

For a specific implementation process of this step, refer to the related description in step S604. Details are not described.

After S1403, the network device may, for example, schedule an uplink transmission resource in the following two manners.

Manner a:

S1404a: The network device sends information #d (the foregoing indication information) to the terminal device.

The network device may schedule, by using the information #d, the terminal device to send uplink transmission on the band A and the band B before switching, and send uplink transmission on the band C and the band D after switching.

It may be understood that, in the manner a, the network device schedules the uplink transmission resource without considering $\min\{\max[T_{switch\_A-C}, T_{switch\_B-D}], \max[T_{switch\_A-D}, T_{switch-B-C}]\}$. In other words, a time interval between time for scheduling the terminal device to send the uplink transmission on the band A and the band B by the network device and time for scheduling the terminal device to send the uplink transmission on the band C and the band D by the network device may be less than $\min\{\max[T_{switch\_A-C}, T_{switch\_B-D}], \max[T_{switch\_A-D}, T_{switch\_B-C}]\}$.

S1405a: The terminal device sends uplink transmission to the network device based on the information #b and the information #d.

The terminal device may skip uplink transmission in $\min\{\max[T_{switch\_A-C}, T_{switch\_B-D}], \max[T_{switch\_A-D}, T_{switch\_B-C}]\}$ based on the information #b and the information #d; or the terminal device may complete uplink switching from the band A and the band B to the band C and the band D in $\min\{\max[T_{switch\_A-C}, T_{switch\_B-D}], \max[T_{switch\_A-D}, T_{switch\_B-C}]\}$; or neither of two radio frequency chains of the terminal device performs uplink transmission in $\min\{\max[T_{switch\_A-C}, T_{switch\_B-D}], \max[T_{switch\_A-D}, T_{switch\_B-C}]\}$; or the terminal device does not expect to send uplink transmission in a time period or on a time domain resource that partially or completely overlaps $\min\{\max[T_{switch\_A-C}, T_{switch\_B-D}], \max[T_{switch\_A-D}, T_{switch\_B-C}]\}$.

For a specific implementation process of this step, refer to the related description in step S601. Details are not described.

Manner b:

S1404b: The network device sends information #e (the foregoing indication information) to the terminal device.

The network device may schedule, by using the information #e, the terminal device to send uplink transmission on the band A and the band B before switching, and send uplink transmission on the band C and the band D after switching, and does not allocate an uplink transmission resource to the terminal device in a time period or on a time domain resource that partially or completely overlaps $\min\{\max[T_{switch\_A-C}, T_{switch\_B-D}], \max[T_{switch\_A-D}, T_{switch\_B-C}]\}$. In other words, when the terminal device sends uplink transmission on the band A, the band B, the band C, and the band D, allocation of an uplink transmission resource by the network device avoids a time period or a time domain resource that partially or completely overlaps $\min\{\max[T_{switch\_A-C}, T_{switch\_B-D}], \max[T_{switch\_A-D}, T_{switch\_B-C}]\}$.

It may be understood that, in this manner, when scheduling the uplink transmission resource, the network device considers $\min\{\max[T_{switch\_A-C}, T_{switch\_B-D}], \max[T_{switch\_A-D}, T_{switch\_B-C}]\}$. In other words, a time interval between time for scheduling the terminal device to send the uplink transmission on the band A and the band B by the network device and time for scheduling the terminal device to send the uplink transmission on the band C and the band D by the network device is greater than or equal to $\min\{\max[T_{switch\_A-C}, T_{switch\_B-D}], \max[T_{switch\_A-D}, T_{switch\_B-C}]\}$.

S1405b: The terminal device sends uplink transmission to the network device based on the information #e.

The terminal device may directly send uplink transmission on a time domain resource allocated based on the information #e, that is, the terminal device may skip uplink transmission in $\min\{\max[T_{switch\_A-C}, T_{switch\_B-D}], \max[T_{switch\_A-D}, T_{switch\_B-C}]\}$; or the terminal device may complete uplink switching from the band A and the band B to the band C and the band D in $\min\{\max[T_{switch\_A-C}, T_{switch\_B-D}], \max[T_{switch\_A-D}, T_{switch\_B-C}]\}$; or neither of two radio frequency chains of the terminal device performs uplink transmission in $\min\{\max[T_{switch\_A-C}, T_{switch\_B-D}], \max[T_{switch\_A-D}, T_{switch\_B-C}]\}$; or the terminal device does not expect to send uplink transmission in a time period or on a time domain resource that partially or completely overlaps $\min\{\max[T_{switch\_A-C}, T_{switch\_B-D}], \max[T_{switch\_A-D}, T_{switch\_B-C}]\}$.

For a specific implementation process of this step, refer to the related description in step S601. Details are not described.

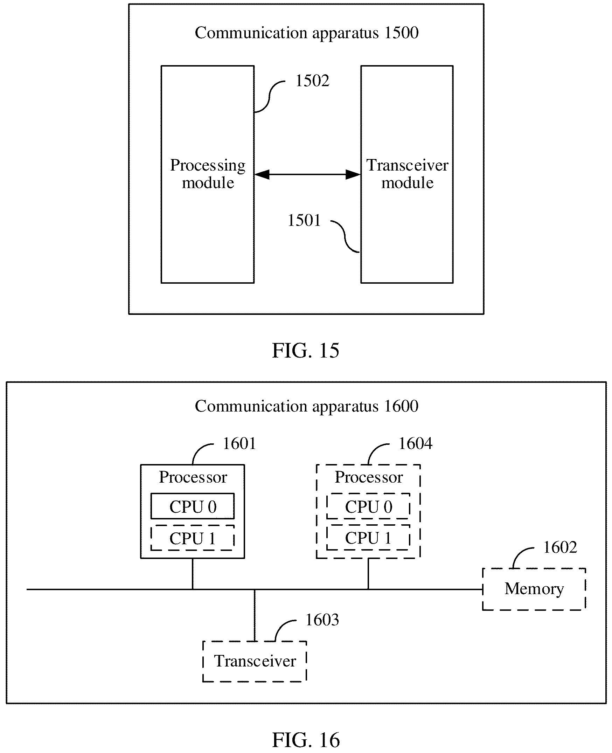

The communication methods provided in embodiments of this application are described above in detail with reference to FIG. 6 to FIG. 14. Communication apparatuses configured to perform the communication methods provided in embodiments of this application are described below in detail with reference to FIG. 15 and FIG. 16.

For example, FIG. 15 is a diagram 1 of a structure of a communication apparatus according to an embodiment of this application. As shown in FIG. 15, the communication apparatus 1500 includes a transceiver module 1501 and a processing module 1502. For ease of description, FIG. 15 shows only main components of the communication apparatus.

In some embodiments, the communication apparatus 1500 may be used in the communication system shown in FIG. 5, and perform a function of the foregoing terminal device.

The transceiver module 1501 may be configured to perform a function of receiving and sending a message by the terminal device, and the processing module 1502 may perform a function of the terminal device other than receiving and sending a message.

For example, the transceiver module 1501 is configured to receive indication information. The indication information indicates the communication apparatus 1500 to send first transmission on a first band, send second transmission on a second band, send third transmission on a third band, and send fourth transmission on a fourth band, and time domain locations of the first transmission and the second transmission are earlier than time domain locations of the third transmission and the fourth transmission; and the communication apparatus 1500 skips uplink transmission in a target time interval, where the target time interval is a minimum value in first time and second time, the first time is a maximum value in a first switching period and a second switching period, and the second time is a maximum value in a third switching period and a fourth switching period; and the first switching period is a switching period of a first band pair, the second switching period is a switching period of a second band pair, the third switching period is a switching period of a third band pair, and the fourth switching period is a switching period of a fourth band pair, where the first band pair is the first band and the third band, the second band pair is the second band and the fourth band, the third band pair is the first band and the fourth band, and the fourth band pair is the second band and the third band.

The processing module 1502 is configured to control the transceiver module 1501 to send first capability information. The first capability information indicates at least one of the following: The communication apparatus 1500 skips uplink transmission in the target time interval; or the communication apparatus 1500 completes uplink switching from the first band and the second band to the third band and the fourth band in the target time interval; or the communication apparatus 1500 does not perform uplink transmission in a time period that partially or completely overlaps the target time interval; or a first radio frequency chain and a second radio frequency chain of the communication apparatus 1500 do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a terminal device, may be a chip (system) or another part or component that may be disposed in the terminal device, or may be an apparatus including the terminal device. This is not limited in this application.

In some other embodiments, the communication apparatus 1500 may be used in the communication system shown in FIG. 5, and perform a function of the foregoing network device.

The transceiver module 1501 may be configured to perform a function of receiving and sending a message by the network device, and the processing module 1502 may perform a function of the network device other than receiving and sending a message.

For example, the processing module 1502 is configured to control the transceiver module 1501 to send indication information. The indication information indicates a terminal device to send first transmission on a first band, send second transmission on a second band, send third transmission on a third band, and send fourth transmission on a fourth band, and times of the first transmission and the second transmission are earlier than times of the third transmission and the fourth transmission; and the network device skips receiving uplink transmission in a target time interval, where the target time interval is a minimum value in first time and second time, the first time is a maximum value in a first switching period and a second switching period, and the second time is a maximum value in a third switching period and a fourth switching period; and the first switching period is a switching period of a first band pair, the second switching period is a switching period of a second band pair, the third switching period is a switching period of a third band pair, and the fourth switching period is a switching period of a fourth band pair, where the first band pair is the first band and the third band, the second band pair is the second band and the fourth band, the third band pair is the first band and the fourth band, and the fourth band pair is the second band and the third band.

The transceiver module 1501 is configured to receive first capability information. The first capability information indicates at least one of the following: The terminal device skips uplink transmission in the target time interval; or the terminal device completes uplink switching from the first band and the second band to the third band and the fourth band in the target time interval; or the terminal device does not perform uplink transmission in a time period that partially or completely overlaps the target time interval; or a first radio frequency chain and a second radio frequency chain of the terminal device do not perform uplink transmission in the target time interval, where the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a network device, may be a chip (system) or another part or component that may be disposed in the network device, or may be an apparatus including the network device. This is not limited in this application.

In addition, for technical effect of the communication apparatus 1500, refer to the technical effect of the foregoing communication method. Details are not described herein.

For example, FIG. 16 is a diagram 2 of a structure of a communication apparatus according to an embodiment of this application. The communication apparatus may be a terminal, or may be a chip (system) or another part or component that may be disposed in the terminal. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected through a communication bus.

The following specifically describes the components of the communication apparatus 1600 with reference to FIG. 16.

The processor 1601 is a control center of the communication apparatus 1600, and may be one processor, or may be a collective term of a plurality of processing elements. For example, the processor 1601 is one or more central processing units (central processing unit, CPU), or may be an application-specific integrated circuit (application-specific integrated circuit, ASIC), or is configured as one or more integrated circuits for implementing embodiments of this application, for example, one or more microprocessors (digital signal processor, DSP) or one or more field programmable gate array (field programmable gate array, FPGA).

Optionally, the processor 1601 may perform various functions of the communication apparatus 1600 by running or executing a software program stored in the memory 1602 and invoking data stored in the memory 1602, for example, perform the communication methods shown in FIG. 6 to FIG. 14.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store the software program for performing the solutions of this application, and the processor 1601 controls the execution. For a specific implementation, refer to the foregoing method embodiments. Details are not described herein.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or data structure and that can be accessed by a computer. However, this is not limited thereto. The memory 1602 may be integrated with the processor 1601, or may exist independently, and is coupled to the processor 1601 through an interface circuit (not shown in FIG. 16) of the communication apparatus 1600. This is not specifically limited in embodiments of this application.

The transceiver 1603 is configured to communicate with another communication apparatus. For example, the communication apparatus 1600 is a terminal, and the transceiver 1603 may be configured to communicate with a network device or communicate with another terminal device. For another example, the communication apparatus 1600 is a network device, and the transceiver 1603 may be configured to communicate with a terminal or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in embodiments of this application.

It should be noted that the structure of the communication apparatus 1600 shown in FIG. 16 does not constitute a limitation on the communication apparatus. An actual communication apparatus may include more or fewer components than those shown in the figure, or a combination of a part of the components, or an arrangement of different components.

In addition, for technical effect of the communication apparatus 1600, refer to the technical effect of the communication method in the foregoing method embodiments. Details are not described herein.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When the software is used to implement the foregoing embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

    receiving, by a terminal device, indication information, wherein the indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission; and

    skiping, by the terminal device, uplink transmission in a target time interval, wherein the target time interval is a minimum value in first time and second time, the first time is a maximum value in a first switching period and a second switching period, and the second time is a maximum value in a third switching period and a fourth switching period; and the first switching period is a switching period of a first band pair, the second switching period is a switching period of a second band pair, the third switching period is a switching period of a third band pair, and the fourth switching period is a switching period of a fourth band pair, wherein the first band pair is the first band and the third band, the second band pair is the second band and the fourth band, the third band pair is the first band and the fourth band, and the fourth band pair is the second band and the third band.

2. The method according to claim 1, wherein the method further comprises:
sending, by the terminal device, first capability information, wherein the first capability information indicates at least one of the following:

    the terminal device skips uplink transmission in the target time interval; or
    the terminal device completes uplink switching from the first band and the second band to the third band and the fourth band in the target time interval; or
    the terminal device does not perform uplink transmission in a time period that partially or completely overlaps the target time interval; or
    a first radio frequency chain and a second radio frequency chain of the terminal device do not perform uplink transmission in the target time interval, wherein the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

3. The method according to claim 2, wherein the method further comprises:
sending, by the terminal device, second capability information, wherein the second capability information indicates at least one of the following:

    the terminal device supports the first band pair, the second band pair, the third band pair, and the fourth band pair; or
    the first switching period, the second switching period, the third switching period, and the fourth switching period.

4. The method according to claim 3, wherein the method further comprises:
receiving, by the terminal device, configuration information, wherein the configuration information indicates that the capability indicated by the first capability information takes effect.

5. The method according to any one of claims 1 to 4, wherein the indication information is carried in at least one of the following:
downlink control information DCI or radio resource control RRC.

6. The method according to any one of claims 1 to 5, wherein the uplink transmission comprises at least one of the following:
a physical random access channel PRACH, a physical uplink control channel PUCCH, a physical uplink shared channel PUSCH, or a sounding reference signal SRS.

7. A communication method, wherein the method comprises:

sending, by a network device, indication information, wherein the indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission; and

skipping, by the network device, receiving uplink transmission in a target time interval, wherein the target time interval is a minimum value in first time and second time, the first time is a maximum value in a first switching period and a second switching period, and the second time is a maximum value in a third switching period and a fourth switching period; and the first switching period is a switching period of a first band pair, the second switching period is a switching period of a second band pair, the third switching period is a switching period of a third band pair, and the fourth switching period is a switching period of a fourth band pair, wherein

the first band pair is the first band and the third band, the second band pair is the second band and the fourth band, the third band pair is the first band and the fourth band, and the fourth band pair is the second band and the third band.

8. The method according to claim 7, wherein the method further comprises:
receiving, by the network device, first capability information, wherein the first capability information indicates at least one of the following:

the terminal device skips uplink transmission in the target time interval; or

the terminal device completes uplink switching from the first band and the second band to the third band and the fourth band in the target time interval; or

the terminal device does not perform uplink transmission in a time period that partially or completely overlaps the target time interval; or

a first radio frequency chain and a second radio frequency chain of the terminal device do not perform uplink transmission in the target time interval, wherein the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

9. The method according to claim 8, wherein the method further comprises:
receiving, by the network device, second capability information, wherein the second capability information indicates at least one of the following:

the terminal device supports the first band pair, the second band pair, the third band pair, and the fourth band pair; or

the first switching period, the second switching period, the third switching period, and the fourth switching period.

10. The method according to claim 9, wherein the method further comprises:
sending, by the network device, configuration information, wherein the configuration information indicates that the capability indicated by the first capability information takes effect.

11. The method according to any one of claims 7 to 10, wherein the indication information is carried in at least one of the following:
downlink control information DCI or radio resource control RRC.

12. The method according to any one of claims 7 to 11, wherein the uplink transmission comprises at least one of the following:
a physical random access channel PRACH, a physical uplink control channel PUCCH, a physical uplink shared channel PUSCH, or a sounding reference signal SRS.

13. A communication method, wherein the method comprises:

receiving, by a terminal device, indication information, wherein the indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission, wherein

a first band pair is the first band and the third band, a second band pair is the second band and the fourth band, a third band pair is the first band and the fourth band, and a fourth band pair is the second band and the third band; a first switching period is a switching period of the first band pair, a second switching period is a switching period of the second band pair, a third switching period is a switching period of the third band pair, and a fourth switching period is a switching period of the fourth band pair; and first time is a maximum value in the first switching period and the second switching period, and second time is a maximum value in the third switching period and the fourth switching period; and

skiping, by the terminal device, uplink transmission in a target time interval, wherein the target time interval is at least one of the following:

a sum of a preset time interval and a minimum value in the first time and the second time; or

a minimum value in third time and fourth time, wherein the third time is a maximum value in the second switching period and a sum of the first switching period and the preset time interval, and the fourth time is a maximum value in the fourth switching period and a sum of the third switching period and the preset time interval; or

a minimum value in the first time and fifth time, wherein the fifth time is a sum of the second time and the preset time interval.

14. The method according to claim 13, wherein at least one timing advance TA in a first TA corresponding to the first band, a second TA corresponding to the second band, a third TA corresponding to the third band, and a fourth TA corresponding to the fourth band belongs to a first timing advance group TAG, and a TA other than the at least one TA in the first TA, the second TA, the third TA, and the fourth TA belongs to a second TAG.

15. The method according to claim 13 or 14, wherein the method further comprises:
sending, by the terminal device, first capability information, wherein the first capability information indicates at least one of the following:

the terminal device skips uplink transmission in the target time interval; or

the terminal device completes uplink switching from the first band and the second band to the third band and the fourth band in the target time interval; or

the terminal device does not perform uplink transmission in a time period that partially or completely overlaps the target time interval; or

a first radio frequency chain and a second radio frequency chain of the terminal device do not perform uplink transmission in the target time interval, wherein the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

16. The method according to claim 15, wherein the method further comprises:
sending, by the terminal device, second capability information, wherein the second capability information indicates at least one of the following:

the terminal device supports the first band pair, the second band pair, the third band pair, and the fourth band pair; or

the first switching period, the second switching period, the third switching period, and the fourth switching period.

17. The method according to claim 16, wherein the method further comprises:
receiving, by the terminal device, configuration information, wherein the configuration information indicates that the capability indicated by the first capability information takes effect.

18. The method according to any one of claims 13 to 17, wherein the indication information is carried in at least one of the following:
downlink control information DCI or radio resource control RRC.

19. The method according to any one of claims 13 to 18, wherein the uplink transmission comprises at least one of the following:

a physical random access channel PRACH, a physical uplink control channel PUCCH, a physical uplink shared channel PUSCH, or a sounding reference signal SRS.

20. A communication method, wherein the method comprises:

sending, by a network device, indication information, wherein the indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission, wherein
a first band pair is the first band and the third band, a second band pair is the second band and the fourth band, a third band pair is the first band and the fourth band, and a fourth band pair is the second band and the third band; a first switching period is a switching period of the first band pair, a second switching period is a switching period of the second band pair, a third switching period is a switching period of the third band pair, and a fourth switching period is a switching period of the fourth band pair; and first time is a maximum value in the first switching period and the second switching period, and second time is a maximum value in the third switching period and the fourth switching period; and
skipping, by the network device, receiving uplink transmission in a target time interval, wherein the target time interval is at least one of the following:
a sum of a preset time interval and a minimum value in the first time and the second time; or
a minimum value in third time and fourth time, wherein the third time is a maximum value in the second switching period and a sum of the first switching period and the preset time interval, and the fourth time is a maximum value in the fourth switching period and a sum of the third switching period and the preset time interval; or
a minimum value in the first time and fifth time, wherein the fifth time is a sum of the second time and the preset time interval.

21. The method according to claim 20, wherein at least one timing advance TA in a first TA corresponding to the first band, a second TA corresponding to the second band, a third TA corresponding to the third band, and a fourth TA corresponding to the fourth band belongs to a first timing advance group TAG, and a TA other than the at least one TA in the first TA, the second TA, the third TA, and the fourth TA belongs to a second TAG.

22. The method according to claim 20 or 21, wherein the method further comprises:
receiving, by the network device, first capability information, wherein the first capability information indicates at least one of the following:

the terminal device skips uplink transmission in the target time interval; or
the terminal device completes uplink switching from the first band and the second band to the third band and the fourth band in the target time interval; or
the terminal device does not perform uplink transmission in a time period that partially or completely overlaps the target time interval; or
a first radio frequency chain and a second radio frequency chain of the terminal device do not perform uplink transmission in the target time interval, wherein the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band.

23. The method according to claim 22, wherein the method further comprises:
receiving, by the network device, second capability information, wherein the second capability information indicates at least one of the following:

the terminal device supports the first band pair, the second band pair, the third band pair, and the fourth band pair; or
the first switching period, the second switching period, the third switching period, and the fourth switching period.

24. The method according to claim 23, wherein the method further comprises:
sending, by the network device, configuration information, wherein the configuration information indicates that the capability indicated by the first capability information takes effect.

25. The method according to any one of claims 20 to 24, wherein the indication information is carried in at least one of the following:
downlink control information DCI or radio resource control RRC.

26. The method according to any one of claims 20 to 25, wherein the uplink transmission comprises at least one of the following:
a physical random access channel PRACH, a physical uplink control channel PUCCH, a physical uplink shared channel PUSCH, or a sounding reference signal SRS.

27. A communication method, wherein the method comprises:

receiving, by a terminal device, indication information, wherein the indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission; and
skiping, by the terminal device, uplink transmission in a target time interval.

28. The method according to claim 27, wherein the method further comprises:
sending, by the terminal device, first capability information, wherein the first capability information indicates at least one of the following:

the terminal device completes uplink switching from the first band and the second band to the third band and the fourth band in the target time interval; or
the terminal device does not perform uplink transmission in a time period that partially or completely overlaps the target time interval; or
a first radio frequency chain and a second radio frequency chain of the terminal device do not perform uplink transmission in the target time interval, wherein the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band; or
when the first radio frequency chain completes uplink switching, the second radio frequency chain starts to perform uplink switching; or
the first radio frequency chain and the second radio frequency chain perform uplink switching sequentially.

29. The method according to claim 27 or 28, wherein the target time interval is a maximum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair; and
the first band pair is the first band and the third band, the second band pair is the second band and the fourth band, the third band pair is the first band and the fourth band, and the fourth band pair is the second band and the third band.

30. The method according to claim 27 or 28, wherein the target time interval is a minimum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair; and
the first band pair is the first band and the third band, the second band pair is the second band and the fourth band, the third band pair is the first band and the fourth band, and the fourth band pair is the second band and the third band.

31. The method according to claim 27 or 28, wherein the target time interval is a maximum value in first time and second time, the first time is a first switching period, and the second time is a sum of a third switching period and a fourth switching period;

the first switching period is a switching period of a first band pair, the third switching period is a switching period of a third band pair, and the fourth switching period is a switching period of a fourth band pair; and

the first band pair is the first band and the third band, the third band pair is the first band and the fourth band, and the fourth band pair is the second band and the third band, wherein the second band and the fourth band are a same band.

32. The method according to claim 27 or 28, wherein the target time interval is a minimum value in first time and second time, the first time is a first switching period, and the second time is a sum of a third switching period and a fourth switching period;

the first switching period is a switching period of a first band pair, the third switching period is a switching period of a third band pair, and the fourth switching period is a switching period of a fourth band pair; and
the first band pair is the first band and the third band, the third band pair is the first band and the fourth band, and the fourth band pair is the second band and the third band, wherein the second band and the fourth band are a same band.

33. The method according to any one of claims 29 to 32, wherein the method further comprises:
sending, by the terminal device, second capability information, wherein the second capability information indicates at least one of the following:

the terminal device supports the first band pair, the second band pair, the third band pair, and the fourth band pair; or
the first switching period, the second switching period, the third switching period, and the fourth switching period.

34. The method according to claim 30 or 32, wherein the method further comprises:
sending, by the terminal device, third capability information, wherein the third capability information indicates that the target time interval is the minimum value in the first time and the second time.

35. The method according to claim 33, wherein the method further comprises:
receiving, by the terminal device, first configuration information, wherein the first configuration information indicates that the capability indicated by the first capability information takes effect.

36. The method according to claim 34, wherein the method further comprises:
receiving, by the terminal device, second configuration information, wherein the second configuration information indicates that the capability indicated by the third capability information takes effect.

37. The method according to any one of claims 27 to 36, wherein the indication information is carried in at least one of the following:
downlink control information DCI or radio resource control RRC.

38. The method according to any one of claims 27 to 37, wherein the uplink transmission comprises at least one of the following:
a physical random access channel PRACH, a physical uplink control channel PUCCH, a physical uplink shared channel PUSCH, or a sounding reference signal SRS.

39. A communication method, wherein the method comprises:

sending, by a network device, indication information, wherein the indication information indicates the terminal device to send first transmission on a first band, send second transmission on a second band, send third transmission on a third band, and send fourth transmission on a fourth band, and time domain locations of the first transmission and the second transmission are earlier than time domain locations of the third transmission and the fourth transmission; and
skipping, by the network device, receiving uplink transmission in a target time interval.

40. The method according to claim 39, wherein the method further comprises:
receiving, by the network device, first capability information, wherein the first capability information indicates at least one of the following:
the first capability information indicates at least one of the following:

the terminal device completes uplink switching from the first band and the second band to the third band and the fourth band in the target time interval; or

the terminal device does not perform uplink transmission in a time period that partially or completely overlaps the target time interval; or

a first radio frequency chain and a second radio frequency chain of the terminal device do not perform uplink transmission in the target time interval, wherein the first radio frequency chain performs uplink switching between the first band and the third band, and the second radio frequency chain performs uplink switching between the second band and the fourth band; or the first radio frequency chain performs uplink switching between the first band and the fourth band, and the second radio frequency chain performs uplink switching between the second band and the third band; or

when the first radio frequency chain completes uplink switching, the second radio frequency chain starts to perform uplink switching; or

the first radio frequency chain and the second radio frequency chain perform uplink switching sequentially.

41. The method according to claim 39 or 40, wherein the target time interval is a maximum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair; and the first band pair is the first band and the third band, the second band pair is the second band and the fourth band, the third band pair is the first band and the fourth band, and the fourth band pair is the second band and the third band.

42. The method according to claim 39 or 40, wherein the target time interval is a minimum value in first time and second time, the first time is a sum of a first switching period and a second switching period, and the second time is a sum of a third switching period and a fourth switching period; and the first switching period is a switching period of a first band pair, the second switching period is a switching period of a second band pair, the third switching period is a switching period of a third band pair, and the fourth switching period is a switching period of a fourth band pair; and the first band pair is the first band and the third band, the second band pair is the second band and the fourth band, the third band pair is the first band and the fourth band, and the fourth band pair is the second band and the third band.

43. The method according to claim 39 or 40, wherein the target time interval is a maximum value in first time and second time, the first time is a first switching period, and the second time is a sum of a third switching period and a fourth switching period;

the first switching period is a switching period of a first band pair, the third switching period is a switching period of a third band pair, and the fourth switching period is a switching period of a fourth band pair; and the first band pair is the first band and the third band, the third band pair is the first band and the fourth band, and the fourth band pair is the second band and the third band, wherein the second band and the fourth band are a same band.

44. The method according to claim 39 or 40, wherein the target time interval is a minimum value in first time and second time, the first time is a first switching period, and the second time is a sum of a third switching period and a fourth switching period;

the first switching period is a switching period of a first band pair, the third switching period is a switching period of a third band pair, and the fourth switching period is a switching period of a fourth band pair; and the first band pair is the first band and the third band, the third band pair is the first band and the fourth band, and the fourth band pair is the second band and the third band, wherein the second band and the fourth band are a same band.

45. The method according to any one of claims 41 to 44, wherein the method further comprises:
receiving, by the network device, second capability information, wherein the second capability information indicates at least one of the following:

the terminal device supports the first band pair, the second band pair, the third band pair, and the fourth band pair; or
the first switching period, the second switching period, the third switching period, and the fourth switching period.

46. The method according to claim 42 or 44, wherein the method further comprises:

receiving, by the network device, third capability information, wherein the third capability information indicates that the target time interval is the minimum value in the first time and the second time.

47. The method according to claim 45, wherein the method further comprises:
sending, by the network device, first configuration information, wherein the first configuration information indicates that the capability indicated by the first capability information takes effect.

48. The method according to claim 46, wherein the method further comprises:
sending, by the network device, second configuration information, wherein the second configuration information indicates that the capability indicated by the third capability information takes effect.

49. The method according to any one of claims 39 to 48, wherein the indication information is carried in at least one of the following:
downlink control information DCI or radio resource control RRC.

50. The method according to any one of claims 39 to 49, wherein the uplink transmission comprises at least one of the following:
a physical random access channel PRACH, a physical uplink control channel PUCCH, a physical uplink shared channel PUSCH, or a sounding reference signal SRS.

51. A communication apparatus, wherein the apparatus comprises a module configured to perform the method according to any one of claims 1 to 50.

52. A communication apparatus, wherein the communication apparatus comprises a processor and a memory, the memory is configured to store computer instructions, and when the processor executes the instructions, the communication apparatus is enabled to perform the method according to any one of claims 1 to 50.

53. A computer-readable storage medium, wherein the computer-readable storage medium comprises a computer program or instructions, and when the computer program or the instructions are run on a computer, the computer is enabled to perform the method according to any one of claims 1 to 50.

| Band X<br>Corresponding time domain<br>resource | Band Z<br>Corresponding time domain<br>resource |
|---|---|

max{X1, X2}

| Band Y<br>Corresponding time domain<br>resource | Band Z<br>Corresponding time domain<br>resource |
|---|---|

max{X1, X2}

FIG. 1a

| Band X<br>Corresponding time domain<br>resource | Band Z<br>Corresponding time domain<br>resource |
|---|---|

max{X1, X2}

| Band Y<br>Corresponding time domain<br>resource | Band Z<br>Corresponding time domain<br>resource |
|---|---|

max{X1, X2}

FIG. 1b

| Band a | Band c |
|---|---|

Switch

| Band b | Band d |
|---|---|

FIG. 2

| Band a | Switch → | Band c |

| Band b | Switch → | Band d |

FIG. 3

| Band a | | Band c |

| Band b | Switch | Band d |

FIG. 4

Network device                    Terminal device

FIG. 5

Network device      Terminal device

S602: The terminal device sends first capability information

S603: The terminal device sends second capability information

S604: The network device sends configuration information

S601: The network device sends indication information

FIG. 6

Network device      Terminal device

S702: The terminal device sends first capability information

S703: The terminal device sends second capability information

S704: The network device sends configuration information

S701: The network device sends indication information

FIG. 7

Uplink transmission

| T1 | 1 | 2 | 3 | 4 | 5 | 6 | 7 | 8 | 9 | 10 | 11 | 12 | 13 | ... |

| 1 | 2 | 3 | 4 | 5 | 6 | 7 | 8 | 9 | 10 | 11 | 12 | 13 | ... |

Uplink transmission      $T_{switch\_1\_2}$

FIG. 8

```
┌─────────────────────┐                    ┌─────────────────────┐
│   Network device    │                    │   Terminal device   │
└─────────────────────┘                    └─────────────────────┘
          │                                            │
          │   S902: The terminal device sends first    │
          │            capability information          │
          │◄───────────────────────────────────────────│
          │                                            │
          │   S903: The terminal device sends second   │
          │            capability information          │
          │◄ ─ ─ ─ ─ ─ ─ ─ ─ ─ ─ ─ ─ ─ ─ ─ ─ ─ ─ ─ ─ ─│
          │                                            │
          │   S904: The terminal device sends third    │
          │            capability information          │
          │◄───────────────────────────────────────────│
          │                                            │
          │    S905: The network device sends first    │
          │           configuration information        │
          │─ ─ ─ ─ ─ ─ ─ ─ ─ ─ ─ ─ ─ ─ ─ ─ ─ ─ ─ ─ ─ ►│
          │                                            │
          │   S906: The network device sends second    │
          │           configuration information        │
          │─ ─ ─ ─ ─ ─ ─ ─ ─ ─ ─ ─ ─ ─ ─ ─ ─ ─ ─ ─ ─ ►│
          │      S901: The network device sends        │
          │            indication information          │
          │────────────────────────────────────────────►│
          │                                            │
```

FIG. 9

FIG. 10

FIG. 11

Band A

$T_{switch\_A-C}$

Band C

| a1 | a2 | a3 | a4 | a5 | a6 | a7 | a8 | a9 | a10 | a11 | a12 | a13 | ⋯ |

Band B

| a1 | a2 | a3 | a4 | a5 | a6 | a7 | a8 | a9 | a10 | a11 | a12 | a13 | ⋯ |

FIG. 12

Band A

$T_{switch\_A-B}$

Band B

| a1 | a2 | a3 | a4 | a5 | a6 | a7 | a8 | a9 | a10 | a11 | a12 | a13 | ⋯ |

Band B

$T_{switch\_B-C}$

Band C

| a1 | a2 | a3 | a4 | a5 | a6 | a7 | a8 | a9 | a10 | a11 | a12 | a13 | ⋯ |

FIG. 13

```
┌──────────────────┐                    ┌──────────────────┐
│  Network device  │                    │  Terminal device │
└──────────────────┘                    └──────────────────┘
         │                                        │
         │   S1401: The terminal device sends     │
         │   information #a to the network device │
         │◄───────────────────────────────────────│
         │                                        │
         │   S1402: The terminal device sends     │
         │   information #b to the network device │
         │◄───────────────────────────────────────│
         │                                        │
         │   S1403: The network device sends      │
         │   information #c to the network device │
         │───────────────────────────────────────►│
         │                                        │
  ┌ ─ ─ ─│─ ─ ─ ─ ─ ─ ─ ─ ─ ─ ─ ─ ─ ─ ─ ─ ─ ─ ─ ─│─ ─ ┐
  │      │   S1404a: The network device sends     │    │
  │      │        indication information #d       │    │
  │      │───────────────────────────────────────►│    │
  │      │                                        │    │
  │      │   S1405a: The terminal device sends    │    │
  │      │    uplink transmission to the network  │    │
  │      │ device based on the information #b and  │    │
  │      │          the information #d             │    │
  │      │◄───────────────────────────────────────│    │
  └ ─ ─ ─│─ ─ ─ ─ ─ ─ ─ ─ ─ ─ ─ ─ ─ ─ ─ ─ ─ ─ ─ ─│─ ─ ┘
         │                                        │
  ┌ ─ ─ ─│─ ─ ─ ─ ─ ─ ─ ─ ─ ─ ─ ─ ─ ─ ─ ─ ─ ─ ─ ─│─ ─ ┐
  │      │   S1404b: The network device sends     │    │
  │      │        indication information #e        │    │
  │      │───────────────────────────────────────►│    │
  │      │                                        │    │
  │      │   S1405b: The terminal device sends    │    │
  │      │    uplink transmission to the network  │    │
  │      │  device based on the information #e     │    │
  │      │◄───────────────────────────────────────│    │
  └ ─ ─ ─│─ ─ ─ ─ ─ ─ ─ ─ ─ ─ ─ ─ ─ ─ ─ ─ ─ ─ ─ ─│─ ─ ┘
         │                                        │
```

FIG. 14

Communication apparatus 1500

1502

Processing
module

Transceiver
module

1501

FIG. 15

Communication apparatus 1600

1601

Processor

CPU 0

CPU 1

1604

Processor

CPU 0

CPU 1

1602

Memory

1603

Transceiver

FIG. 16

## INTERNATIONAL SEARCH REPORT

| International application No. |
| --- |
| **PCT/CN2024/086874** |

| A. | CLASSIFICATION OF SUBJECT MATTER |
| --- | --- |

H04W 72/0453(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 射频链, RF链, 切换, 小, 大, 长, 短, 省略, 取消, RF chain, switch+, small+, big+, short+, long+, omi+, cancel+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112399569 A (HUAWEI TECHNOLOGIES CO., LTD.) 23 February 2021 (2021-02-23) description, paragraphs 0002-0736 | 27-29, 31, 33, 35, 37-41, 43, 45, 47, 49-53 |
| A | CN 112399569 A (HUAWEI TECHNOLOGIES CO., LTD.) 23 February 2021 (2021-02-23) description, paragraphs 0002-0736 | 1-26, 30, 32, 34, 36, 42, 44, 46, 48 |
| A | CN 115175339 A (HUAWEI TECHNOLOGIES CO., LTD.) 11 October 2022 (2022-10-11) entire document | 1-53 |
| A | US 2022369337 A1 (ZTE CORP.) 17 November 2022 (2022-11-17) entire document | 1-53 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 June 2024** | **20 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086874**

| Patent document cited in search report | | | Publication date (day/month/year) | Patent family member(s) | | | Publication date (day/month/year) |
|---|---|---|---|---|---|---|---|
| CN | 112399569 | A | 23 February 2021 | WO | 2021027887 | A1 | 18 February 2021 |
| | | | | US | 2022166594 | A1 | 26 May 2022 |
| | | | | EP | 4013133 | A1 | 15 June 2022 |
| CN | 115175339 | A | 11 October 2022 | WO | 2022213872 | A1 | 13 October 2022 |
| | | | | EP | 4301043 | A1 | 03 January 2024 |
| | | | | US | 2024023096 | A1 | 18 January 2024 |
| | | | | JP | 2024512823 | A | 19 March 2024 |
| US | 2022369337 | A1 | 17 November 2022 | WO | 2021098127 | A1 | 27 May 2021 |
| | | | | EP | 4082235 | A1 | 02 November 2022 |
| | | | | KR | 20220134552 | A | 05 October 2022 |
| | | | | CN | 114731509 | A | 08 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310413095
- CN 202310548555